# EUROPÄISCHE PATENTSCHRIFT

(11) **EP 3 835 495 B1**
(45) Veröffentlichungstag und Bekanntmachung des Hinweises auf die Patenterteilung: **21.06.2023**
(21) Anmeldenummer: 20212675.1
(22) Anmeldetag: 09.12.2020
(51) Int. Cl.: E03B 7/07, E03B 7/08, F24D 17/00, E03C 1/086, F16L 37/48

(54) **SPÜLVORRICHTUNG, SYSTEM UND VERFAHREN ZUR DURCHFÜHRUNG VON HYGIENESPÜLUNGEN**
WASH DEVICE, SYSTEM AND METHOD FOR CARRYING OUT HYGIENIC WASHES
DISPOSITIF DE RINÇAGE, SYSTÈME ET PROCÉDÉ DE MISE EN OEUVRE D'UN RINÇAGE D'HYGIÈNE

(30) Priorität: 09.12.2019 DE 102019008495; 10.02.2020 DE 102020000841
(43) Veröffentlichungstag der Anmeldung: 16.06.2021
(73) Patentinhaber: Andres, Rico, 55340 Meckenheim (DE)
(72) Erfinder: Andres, Rico, 55340 Meckenheim (DE)
(74) Vertreter: Weyers, Christopher

(56) Entgegenhaltungen:
- EP-A1- 3 364 114
- EP-A1- 3 550 085
- DE-A1-102011 013 955
- GB-A- 2 502 165
- US-A1- 2016 150 298
- US-A1- 2018 143 059
- US-A1- 2019 025 150

## Beschreibung

Die vorliegende Erfindung betrifft eine Spülvorrichtung nach dem Oberbegriff des Anspruchs 1, ein System, ein Verfahren und eine Verwendung.

Die Erfindung betrifft die automatische Durchführung von Hygienespülungen in einem Trinkwassersystem.

Trinkwasser unterliegt strengen hygienischen Vorschriften und Grenzwerten. Beim Einhalten der Vorschriften kann es problematisch sein, wenn Leitungen für das Trinkwasser temporär nicht benutzt werden, beispielsweise wenn eine Wohnung über einen längeren Zeitraum leer steht oder in einem Krankenhaus oder Hotel einzelne Zimmer einige Tage nicht belegt sind. In solchen Fällen stagniert das Wasser in den Leitungen. Hierdurch können sich Verunreinigungen bilden, insbesondere durch Legionellen und Pseudomonaden.

Die Betreiber beispielsweise von Immobilien, Krankenhäusern, Ferienhäusern, Hotels, Altenheimen o. dgl. sind gesetzlich dazu verpflichtet, die Vorschriften für Trinkwasser einzuhalten bzw. für Trinkwasser für den menschlichen Gebrauch zu sorgen und/oder den bestimmungsmäßigen Gebrauch einzuhalten.

Das Durchführen von sogenannten "Hygienespülungen" bewirkt, dass die Wasserqualität in den Leitungen den Anforderungen für Trinkwasser entspricht. Bei einer Hygienespülung wird das Wasser in den Leitungen ausgetauscht, so dass "altes" Wasser aus den Leitungen herausgespült und durch frisches Wasser bzw. Trinkwasser ersetzt wird. Insbesondere wird Wasser am Leistungsende abgelassen, sodass Wasser aus einer Hauptversorgungsleitung, die oftmals mehrere Gebäude mit Wasser versorgt, nachströmt, bis ein vollständiger Austausch des Wassers erfolgt ist.

Hygienespülungen können manuell erfolgen, indem beispielsweise alle zwei bis drei Tage Armaturen manuell geöffnet werden und somit das Wasser in den Leitungen durch frisches Wasser ersetzt wird. Diese Vorgehensweise ist jedoch unwirtschaftlich, aufwändig und erfüllt häufig auch nicht die Anforderungen an eine korrekte Hygienespülung.

Aus dem Stand der Technik sind aber auch bereits Lösungen zum automatischen Durchführen von Hygienespülungen bekannt.

Aus der GB 2052165 A ist ein automatisches Spülsystem bekannt, das ein Flusskontrollventil und einen Temperatursensor zur Messung der Temperatur eines Fluids, das durch einen Auslass fließt, aufweist. Die Temperaturdaten können überwacht werden, um zu bestimmen, ob ein Spülereignis adäquat oder inadäquat ist.

Die US 2018/0143059 A1 betrifft ein System zur Bestimmung eines abnormalen Verbrauchs in einer Wasserinfrastruktur. Das System kann durch Vergleich von Wasserverbrauchsprofilen bestimmen, dass ein aktueller Wasserverbrauch einen erwarteten Wasserverbrauch überschreitet. Hierdurch ist die Detektion von Lecks ermöglicht. Eine automatische Durchführung von Hygienespülungen wird nicht erwähnt.

Aus der EP 1 964 983 A1 ist eine Unterputzvorrichtung zum Durchführen von Hygienespülungen bekannt. Die Unterputzvorrichtung ist an eine Warmwasserleitung und an eine Kaltwasserleitung eines Rohrleitungssystems angeschlossen. Innerhalb eines Gehäuses der Vorrichtung sind steuerbare Magnetventile angeordnet, die mit den Rohrleitungen verbunden sind. Beim Öffnen der Ventile fließt das Wasser aus den Rohrleitungen in einen Siphon und von dort aus über einen Stutzen in eine Entsorgungsleitung des Rohrleitungssystems. Die Vorrichtung hat den Nachteil, dass sie fest in ein Rohrleitungssystem installiert werden muss und für einen temporären bzw. kurzfristigen Einsatz, beispielsweise in einem für wenige Tage leerstehenden Hotelzimmer o. dgl., ungeeignet ist.

Aus der EP 3 363 956 A1 ist ebenfalls eine Vorrichtung zum automatischen Durchführen von Hygienespülungen bekannt. Die Vorrichtung umfasst eine Ventileinheit und eine Abflussgehäuseeinheit. Die Ventileinheit umfasst einen Einlassstutzen zum Anschluss an die Wasserleitung, einen Auslassstutzen und ein zwischen Einlassstutzen und Auslassstutzen angeordnetes Ventil. Der Auslassstutzen endet in der Abflussgehäuseeinheit, so dass Wasser vom Auslassstutzen in die Abflussgehäuseeinheit, die einen Geruchsverschluss bildet, abgegeben werden kann. Die Abflussgehäuseeinheit wird mit einem Abwassernetz verbunden.

Aus der DE 10 2013 102 567 A1 ist eine Vorrichtung zum Durchführen von Hygienespülungen bekannt, die lösbar mit einer Wasserabgabevorrichtung verbindbar ist. Die Vorrichtung weist ein Ventil und eine Steuerung zum programmierbaren Öffnen und Schließen des Ventils auf. Die Vorrichtungen kann auch einen Temperaturfühler beinhalten, wobei die gemessene Temperatur bei der Steuerung berücksichtigt wird.

Aus der DE 10 2014 201 909 A1 ist eine automatische Spülvorrichtung zur Anordnung an eine Wasserentnahmestelle eines Wasserleitungssystems bekannt. Eine Steuereinrichtung öffnet und schließt ein steuerbares Ventil nach bestimmten Intervallzeiten und/oder Spülzeiten. Die Spülvorrichtung weist einen Durchflussmesser auf, sodass die Steuerung das steuerbare Ventil auch nach einer definierten Spülmenge, die durch das Ventil geströmt ist, schließen kann.

Die bekannten Vorrichtungen werden jeweils fest in einem Gebäude bzw. einem Rohrleitungssystem installiert. Diese Installation ist verhältnismäßig aufwändig und muss von einem Fachmann durchgeführt werden. Eine einfach zu installierende und zu deinstallierende Vorrichtung, die insbesondere auch für einen Zeitraum von wenigen Tagen oder Wochen komfortabel eingesetzt werden kann, ist daher wünschenswert.

Ein weiterer Nachteil der bekannten Vorrichtungen besteht darin, dass jeweils vorgesehen ist, die Vorrichtungen an eine Abwasser- bzw. Entsorgungsleitung anzuschließen. Daher sind die Vorrichtungen jeweils mit einem Siphon bzw. Geruchsverschluss ausgestattet und weisen dementsprechend einen verhältnismäßig komplizierten Aufbau auf.

Darüber hinaus besteht ein weiterer Nachteil der bekannten Vorrichtungen darin, dass diese nicht an Wannen bzw. Duschen einsetzbar sind. Es können daher bei diesen Geräten keine Hygienespülungen durchgeführt werden. Eine Hygienespülung an Duschen und Wannen ist aber äußerst wünschenswert, da Legionellen insbesondere dann die Legionärskrankheit verursachen, wenn sie, beispielsweise beim Duschen oder Baden, eingeatmet werden.

Es ist eine Aufgabe der vorliegenden Erfindung, eine Spülvorrichtung, ein System und ein Verfahren zur Durchführung von Hygienespülungen sowie eine Verwendung einer Spülvorrichtung anzugeben, wobei eine Optimierung von Hygienespülungen ermöglicht ist.

Die obige Aufgabe wird gelöst durch eine Spülvorrichtung gemäß Anspruch 1, ein System gemäß Anspruch 12, ein Verfahren gemäß Anspruch 13 oder eine Verwendung gemäß Anspruch 14 oder 15. Vorteilhafte Weiterbildungen sind Gegenstand der Unteransprüche.

Gemäß einem ersten Aspekt betrifft die vorliegende Erfindung eine Spülvorrichtung zur automatischen Durchführung von Hygienespülungen in einem Trinkwassersystem. Die Spülvorrichtung weist einen Temperatursensor zur Messung
der Temperatur von die Spülvorrichtung bei einer Hygienespülung durchlaufendem Wasser auf.

Die Spülvorrichtung ist dazu ausgebildet, mit dem Temperatursensor Temperaturverläufe von separaten, mit der Spülvorrichtung durchgeführten Hygienespülungen zu ermitteln und Abweichungen zwischen den Temperaturverläufen zu ermitteln. Dies ermöglicht beispielsweise die Anpassung der Dauer von Hygienespülungen auf Basis der Temperaturverläufe oder eine Erkennung von Leckagen oder Schäden in dem Trinkwassersystem. Insbesondere ist also ein sicherer Betrieb ermöglicht.

Die Spülvorrichtung weist vorzugsweise - zusätzlich zu dem Temperatursensor zur Messung der Temperatur von Wasser, das die Spülvorrichtung bei einer Hygienespülung durchläuft - einen Umgebungstemperatursensor zur Messung der Umgebungstemperatur auf. Weiter ist die Spülvorrichtung vorzugsweise dazu ausgebildet, auf Basis eines Vergleichs von Messwerten des Temperatursensors zur Messung der Wassertemperatur mit Messwerten des Umgebungstemperatursensors eine Anomalie zu erkennen, insbesondere einen Ausfall einer Heizeinrichtung oder eine Rohrbruchgefahr zu detektieren. Hierbei kann die Heizeinrichtung eine Heizeinrichtung des Trinkwassersystems, also beispielsweise ein Boiler oder dergleichen zum Erwärmen von Wasser in dem Trinkwassersystem, aber alternativ oder zusätzlich auch eine sonstige Heizeinrichtung wie beispielsweise eine Heizung in einem Gebäude mit dem Trinkwassersystem sein, die von dem Trinkwassersystem separat ist. Bei einem Ausfall einer Heizeinrichtung kann es, insbesondere im Winter, dazu kommen, dass Wasser in dem Trinkwassersystem gefriert. Daher kann ein Schaden an dem Trinkwassersystem vermieden werden, wenn rechtzeitig erkannt wird, dass eine Heizeinrichtung ausgefallen ist.

Die Spülvorrichtung ist vorzugsweise dazu ausgebildet, eine Mitteilung, insbesondere eine Warnung, zu generieren, auszugeben und/oder zu übermitteln, wenn eine Abweichung zwischen verschiedenen Temperaturverläufen mindestens ein Prüfkriterium erfüllt. Hierdurch kann ein Benutzer der Spülvorrichtung rechtzeitig auf Probleme aufmerksam gemacht werden, sodass ein sicherer Betrieb der Spülvorrichtung ermöglicht ist und Schäden an der Spülvorrichtung bzw. dem Trinkwassersystem verhindert werden können.

Die Abweichung zwischen Temperaturverläufen kann beispielsweise darin bestehen, dass nach einer geringeren Zeit als bei einem oder mehreren vorherigen Temperaturverläufen bzw. Hygienespülungen ein vorgegebener oder vorgebbarer Schwellwert für eine (absolute oder relative) Temperatur, Temperaturdifferenz, einen Verlauf der Temperatur und/oder eine Temperaturänderungsrate erreicht oder unterschritten wird bzw. eine - zumindest im Wesentlichen - konstante Temperatur erreicht wird. Eine solche Abweichung kann ein Hinweis darauf sein bzw. als Indikator dafür verwendet werden, dass ein Leck in dem Trinkwassersystem besteht, sodass durch die Mitteilung ein sicherer Betrieb ermöglicht ist.

Die Spülvorrichtung ist vorzugsweise dazu ausgebildet, anhand von Abweichungen zwischen Temperaturverläufen eine Leckage und/oder einen Schaden, insbesondere Rohrbruch, in dem Trinkwassersystem und/oder einen Ausfall einer Heizeinrichtung, insbesondere des Trinkwassersystems, zu erkennen. Hierdurch ist ein sicherer Betrieb ermöglicht.

Vorzugsweise ist die Mitteilung, insbesondere Warnung, ein akustisches und/oder optisches Signal und/oder ist die Mitteilung bzw. Warnung an ein externes Gerät, insbesondere einem Server, ein mobiles Endgerät oder eine Bedienvorrichtung, übermittelbar. Die Spülvorrichtung ist vorzugsweise also zur Ausgabe der Mitteilung, insbesondere in Form eines akustischen bzw. optischen Signals und/oder durch Übermittlung der Mitteilung an ein externes Gerät, ausgebildet. Durch die Übermittlung an ein externes Gerät kann vorzugsweise ein Betreiber bzw. Nutzer der Spülvorrichtung unmittelbar informiert bzw. gewarnt werden, sodass durch die Mitteilung ein sicherer Betrieb ermöglicht ist.

Die Mitteilung, insbesondere Warnung, wird vorzugsweise auf Basis des Vergleichs der Temperaturverläufe oder einer hierdurch identifizierten Leckage generiert bzw. übermittelt. Alternativ oder zusätzlich kann die Mitteilung das Ergebnis eines Vergleichs zwischen Temperaturverläufen und/oder ein Hinweis auf eine mögliche Leckage aufweisen.

Die Spülvorrichtung weist vorzugsweise einen Drucksensor auf. Hierbei ist die Spülvorrichtung vorzugsweise dazu ausgebildet, auf Basis eines Temperaturverlaufs und eines mit dem Drucksensor gemessenen Drucks oder Druckverlaufs eine Druckanomalie, eine Leckage und/oder einen Schaden, insbesondere Rohrbruch, in dem Trinkwassersystem zu erkennen. Insbesondere wird der Druck oder ein Druckverlauf bei geschlossener Spülvorrichtung ausgewertet, um die Druckanomalie zu ermitteln. Alternativ oder zusätzlich kann der Druckverlauf ausgewertet werden, der bei Öffnung oder geöffneter Spülvorrichtung bzw. während eines Spülvorgangs gemessen wird. In einer besonders bevorzugten Ausgestaltung der vorliegenden Erfindung wird die Identifikation einer Druckanomalie kombiniert mit dem Ergebnis eines Vergleichs von Temperaturverläufen unterschiedlicher Spülvorgänge, insbesondere wie zuvor beschrieben. Weiter ist die Spülvorrichtung vorzugsweise dazu ausgebildet, bei einer Erkennung einer Druckanomalie, gegebenenfalls bei zusätzlicher Ermittlung des Indikators auf Basis des Vergleichs von Temperaturverläufen, eine Mitteilung, insbesondere Warnung, zu generieren, auszugeben und/oder zu übermitteln. Dies ist der Sicherheit bei dem Betrieb der Spülvorrichtung und/oder des Trinkwassersystems zuträglich.

Die Spülvorrichtung ist vorzugsweise dazu ausgebildet, eine Temperaturdifferenz der Messwerte des Temperatursensors für das Wasser in dem Trinkwassersystem und des Umgebungstemperatursensors während einer Hygienespülung zu bestimmen und die Temperaturdifferenz, insbesondere ein Temperaturdifferenzmaximum, mit einem Prüfkriterium zu bewerten. Hierbei ist die Spülvorrichtung vorzugsweise weiter dazu ausgebildet, in Abhängigkeit von der Temperaturdifferenz eine Mitteilung, insbesondere Warnung, zu generieren, auszugeben und/oder zu übermitteln. Dies ist der Sicherheit bei dem Betrieb der Spülvorrichtung und/oder des Trinkwassersystems zuträglich.

Vorzugsweise weist die Spülvorrichtung ein elektrisch steuerbares, bistabiles Ventil auf und ist dazu ausgebildet, dass bei Öffnung des Ventils Wasser aus der Spülvorrichtung austritt und bei Schließen des Ventils der Austritt von Wasser aus der Spülvorrichtung unterbunden wird. Ein bistabiles Ventil ist insbesondere ein solches Ventil, das konstruktionsbedingt zum Öffnen und zum Schließen angesteuert werden muss, jedoch nicht, um einen geöffneten oder geschlossenen Zustand beizubehalten. Ein einmal geöffnetes bistabiles Ventil bleibt also vorzugsweise stabil im geöffneten Zustand, bis es zum Schließen erneut angesteuert wird. Ferner verharrt ein bistabiles Ventil vorzugsweise in einem geschlossenen Zustand, ohne dass dies eine durchgehende Ansteuerung erfordern würde.

Hierbei weist die Spülvorrichtung vorzugsweise eine Energieversorgungsvorrichtung für eine Regelenergieversorgung und eine von der Energieversorgungseinrichtung getrennte Notenergieversorgungseinrichtung auf, mittels der das Ventil bei einem Ausfall der Energieversorgungseinrichtung bzw. Regelenergieversorgung schließbar ist. Dies ist der Sicherheit beim Betrieb der Spülvorrichtung bzw. des Trinkwassersystems zuträglich.

Die Notenergieversorgungseinrichtung weist vorzugsweise einen elektrischen Energiespeicher auf, der durch die Energieversorgungseinrichtung aufladbar und zum Schließen des Ventils getrennt von der Energieversorgungeinrichtung mit dem Ventil verbindbar oder verbunden ist. Dies ist der Sicherheit beim Betrieb der Spülvorrichtung bzw. des Trinkwassersystems zuträglich.

Vorzugsweise weist die Spülvorrichtung eine Steuerung auf, die dazu ausgebildet ist, automatisch das Schließen des Ventils mittels der Notenergieversorgungseinrichtung zu bewirken, wenn bei geöffnetem Ventil die Energieversorgungseinrichtung bzw. Regelenergieversorgung ausfällt. Dies ist der Sicherheit beim Betrieb der Spülvorrichtung bzw. des Trinkwassersystems zuträglich.

Weiter ist bevorzugt, dass die Spülvorrichtung dazu ausgebildet ist, eine Mitteilung, insbesondere Warnung, zu generieren, auszugeben und/oder zu übermitteln, wenn die Energieversorgungseinrichtung bzw. Regelenergieversorgung ausfällt. Dies ist der Sicherheit beim Betrieb der Spülvorrichtung bzw. des Trinkwassersystems zuträglich.

Das Ventil ist vorzugsweise ein Kartuschenventil und/oder ist eine Kartusche oder ein Teil hiervon. Es ist vorzugsweise ein, insbesondere bistabiles, Magnetventil. Das Ventil ist vorzugsweise spannungsgesteuert. Es kann sich um einen Einsatz handeln oder durch Einsetzen gebildet sein. Dies ist einem einfachen und kompakten Aufbau zuträglich.

Vorzugsweise weist die Spülvorrichtung ein Gehäuse, ein Ventil mit einem Ventilkopf und einen oder mehrere Sensoren, nämlich den Temperatursensor und insbesondere einen Drucksensor, einen Volumenstromsensor und/oder
einen Füllstandssensor, auf. Das Gehäuse bildet vorzugsweise einen Fluidkanal mit einem Einlass und einem Auslass.

Vorzugsweise ist/sind der Ventilkopf und/oder mindestens einer der Sensoren von einer Außenseite des Gehäuses aus derart mit dem Gehäuse verbindbar oder verbunden, dass der Ventilkopf und/oder der mindestens eine Sensor zwischen dem Einlass und dem Auslass mit dem Fluidkanal in Wirkverbindung stehen. Dies ermöglicht einen besonders kompakten Aufbau der Spülvorrichtung.

Der Fluidkanal ist vorzugsweise durch eine oder mehrere Ausnehmungen bzw. Löcher, insbesondere Bohrungen, in dem Gehäuse gebildet. Dies ist einem besonders kompakten Aufbau der Spülvorrichtung zuträglich.

Das Gehäuse weist vorzugsweise mindestens ein Loch auf, welches sich von einer Außenseite des Gehäuses zu dem Fluidkanal erstreckt. Der Ventilkopf und/oder der mindestens eine Sensor sind vorzugsweise derart in dem Loch anordenbar oder angeordnet, dass das Loch fluiddicht verschlossen ist und der Ventilkopf und/oder der Sensor mit dem Fluidkanal in Wirkverbindung stehen. Dies ist einem besonders kompakten Aufbau der Spülvorrichtung zuträglich. Bei dem Loch handelt es sich ganz besonders bevorzugt um ein Sackloch. Das Loch kann einerseits dadurch gebildet sein, dass am Ende des Lochs der Fluidkanal dazu führt, dass das Loch nicht durchgängig ist. Alternativ oder zusätzlich kann das Loch durch eine Ringschulter in seiner Tiefe begrenzt sein, die eine Dichtfläche bilden kann. In diesem Fall kann das Sackloch endseitig einen Durchbruch zum Fluidkanal aufweisen.

Vorzugsweise weist das Loch bzw. weisen die Löcher jeweils ein Gewinde zur Verbindung mit dem Ventil und/oder dem Sensor auf und ist das Ventil und/oder der Sensor in das Loch bzw. eines der Löcher einschraubbar. Hierdurch kann die Spülvorrichtung besonders leicht hergestellt bzw. in einen betriebsbereiten Zustand versetzt werden. Ferner ist ein einfacher Austausch bzw. eine einfache Reparatur des Ventils und/oder der Sensoren bzw. der Spülvorrichtung ermöglicht.

Vorzugsweise weist das Loch bzw. weisen die Löcher jeweils eine Dichtfläche zur Abdichtung des Ventils bzw. Ventilkopfs und/oder Sensor(s) auf. Das Loch kann eine sich radial erstreckende Schulter aufweisen, auf der ein Dichtring zwischen dem Ventil und/oder Sensor und der Dichtfläche angeordnet sein kann. Alternativ oder zusätzlich kann die Dichtfläche des jeweiligen Sacklochs auch radial vorgesehen sein, sodass ein Dichtring zwischen dem Ventil bzw. Ventilkopf und/oder Sensor und einer radialen Umfangsfläche des (jeweiligen) Sacklochs vorgesehen ist, um das Ventil, den Ventilkopf und/oder den Sensor gegenüber dem Gehäuse abzudichten. Hier sind jedoch auch andere Lösungen zur entsprechenden Abdichtung möglich.

Das bzw. die Sacklöcher weisen vorzugsweise einen bodenseitigen bzw. endseitigen Durchbruch zu dem Fluidkanal auf.

Gemäß einem weiteren Aspekt betrifft die vorliegende Erfindung ein System zur automatischen Durchführung von Hygienespülungen in einem Trinkwassersystem. Das System weist eine Auslaufarmatur und eine bevorzugte mobile Spülvorrichtung auf. Die Spülvorrichtung ist vorzugsweise wie voranstehend und nachfolgend beschrieben ausgebildet.

Vorzugsweise weist die Spülvorrichtung einen oder mehrere Sensoren, insbesondere einen Drucksensor, einen Volumenstromsensor, einen Temperatursensor und/oder einen Füllstandssensor, auf. Weiter ist die Spülvorrichtung vorzugsweise an einen Auslauf der Auslaufarmatur fluidisch angeschlossen oder anschließbar.

Das System weist einen von der Spülvorrichtung körperlich getrennten Server auf und ist dazu ausgebildet, Messwerte der Sensoren und/oder eine auf Basis der Messwerte erzeugte Mitteilung, insbesondere Warnung, automatisch an den Server zu übermitteln.

Der Server ist dazu konfiguriert, die Messwerte und/oder Mitteilung an ein mobiles Endgerät, insbesondere ein Tablet, Mobiltelefon bzw. Smartphone, Notebook oder dergleichen, zu übermitteln, insbesondere in einer E-Mail, SMS, Nachricht eines Instant-Messaging-Dienstes und/oder Push-Mitteilung. Dies ist einem sicheren Betrieb zuträglich.

Alternativ oder zusätzlich ist der Server dazu konfiguriert, die Spülvorrichtung zu steuern, zu programmieren und/oder zu konfigurieren. Insbesondere sind also Einstellungen der Spülvorrichtung durch bzw. über den Server vornehmbar bzw. änderbar. Dies ist einer einfachen Bedienung bzw. einem komfortablen Betrieb der Spülvorrichtung zuträglich, insbesondere wenn eine Vielzahl von Spülvorrichtungen gleichzeitig betrieben wird.

Gemäß einem weiteren, auch unabhängig realisierbaren Aspekt betrifft die vorliegende Erfindung ein Verfahren, wobei mit einer bevorzugt mobilen Spülvorrichtung zur automatischen Durchführung von Hygienespülungen in einem Trinkwassersystem Temperaturverläufe von separaten, mit der Spülvorrichtung durchgeführten Hygienespülungen ermittelt werden und Abweichungen zwischen den Temperaturverläufen ermittelt werden. Die Spülvorrichtung weist einen Temperatursensor zur Messung des Wassers auf, das die Spülvorrichtung bei einer Hygienespülung durchläuft. Weiter ist die Spülvorrichtung vorzugsweise wie voranstehend und nachstehend beschrieben ausgebildet.

Gemäß einem weiteren, auch unabhängig realisierbaren Aspekt betrifft die vorliegende Erfindung die Verwendung einer mobilen Spülvorrichtung zur Leckageüberwachung eines Trinkwassersystems. Die Spülvorrichtung ist hierbei zur automatischen Durchführung von Hygienespülungen in einem Trinkwassersystem und zum Anschluss an einen Auslauf einer Auslaufarmatur ausgebildet. Des Weiteren weist die Spülvorrichtung einen Drucksensor zur Bestimmung des Drucks in dem Trinkwassersystem auf. Weiter ist die Spülvorrichtung wie voranstehend und nachstehend beschrieben ausgebildet.

Gemäß einem weiteren, auch unabhängig realisierbaren Aspekt betrifft die vorliegende Erfindung die Verwendung einer mobilen Spülvorrichtung zur Ermittlung eines Lecks oder Schadens in einem Trinkwassersystem, zur Überwachung der Funktion mindestens einer Heizeinrichtung, insbesondere des Trinkwassersystems, zur Messung einer Umgebungstemperatur und/oder zur Ermittlung einer Rohrbruchgefahr. Die Spülvorrichtung ist hierbei zur automatischen Durchführung von Hygienespülungen in dem Trinkwassersystem und zum Anschluss an einen Auslauf einer Auslaufarmatur ausgebildet. Des Weiteren weist die Spülvorrichtung einen Temperatursensor, insbesondere zur Messung des Wassers, das die Spülvorrichtung bei einer Hygienespülung durchläuft, auf. Weiter ist die Spülvorrichtung wie voranstehend und nachstehend beschrieben ausgebildet.

Gemäß einem weiteren, nicht beanspruchten Aspekt betrifft die vorliegende Offenbarung ein System zur automatischen Durchführung von Hygienespülungen in einem Trinkwassersystem. Das System weist eine Auslaufarmatur und eine Spülvorrichtung auf. Die Spülvorrichtung ist bevorzugt eine mobile Spülvorrichtung und insbesondere schnell und/oder unkompliziert austauschbar.

Die Spülvorrichtung weist vorzugsweise einen oder mehrere Sensoren auf. Insbesondere weist die Spülvorrichtung einen Drucksensor, einen Volumenstromsensor und/oder einen Temperatursensor auf.

Die Spülvorrichtung ist vorzugsweise auslaufseitig an die Auslaufarmatur bzw. an einen Auslauf der Auslaufarmatur fluidisch anschließbar oder angeschlossen. Dies ist vorteilhaft für eine einfache Installation und Deinstallation der Spülvorrichtung.

Vorzugsweise weist die Spülvorrichtung einen Einlass und einen Auslass auf. Der Einlass der Spülvorrichtung ist vorzugsweise (auslaufseitig) an die Auslaufarmatur angeschlossen und der Auslass bildet vorzugsweise ein offenes Ende der Spülvorrichtung. Insbesondere ist der Auslass der Spülvorrichtung nicht unmittelbar an ein Rohr oder eine Leitung wie beispielsweise eine Ableitung des Trinkwassersystems bzw. eine Abwasserleitung angeschlossen. Dies ist vorteilhaft für eine einfache Installation und Deinstallation der Spülvorrichtung.

Der Auslass der Spülvorrichtung ist vorzugsweise in ein der Auslassarmatur zugeordnetes Becken, beispielsweise ein Waschbecken, eine Duschwanne, eine Badewanne o. dgl., gerichtet. Hierdurch kann darauf verzichtet werden, die Spülvorrichtung an eine Abwasserleitung anzuschließen. Dies erleichtert die Installation und Deinstallation der Spülvorrichtung.

Die Spülvorrichtung ist vorzugsweise von der Auslaufarmatur gehalten. Vorzugsweise ist die Spülvorrichtung starr an die Auslaufarmatur angeschlossen oder anschließbar. Besonders bevorzugt ist die Spülvorrichtung unmittelbar an der Auslaufarmatur bzw. deren Auslauf angeschlossen, insbesondere auf den Auslauf aufgeschraubt. Dies ist vorteilhaft für eine einfache Installation und Deinstallation der Spülvorrichtung.

Das System weist vorzugsweise eine von der Spülvorrichtung körperlich getrennte Bedienvorrichtung zur Bedienung der Spülvorrichtung auf. Die Bedienvorrichtung ist vorzugsweise zur Konfiguration der Spülvorrichtung und/oder der Anzeige statischer Daten oder von Einstellungen der Spülvorrichtung ausgebildet. Die Bedienvorrichtung ist vorzugsweise durch ein Smartphone, ein Tablet, einen Laptop oder ein sonstiges Endgerät, insbesondere ein mobiles Endgerät, gebildet. Dies ist vorteilhaft für eine einfache Bedienung der Spülvorrichtung.

Vorzugsweise ist die Spülvorrichtung zum Aufzeichnen von Daten von einer oder mehreren Hygienespülungen ausgebildet ist. Hierdurch kann eine Überprüfung der Hygienespülungen und ggf. eine Anpassung, Änderung oder Optimierung von Einstellungen für weitere Hygienespülungen erfolgen.

Die Spülvorrichtung ist insbesondere zur Übermittlung der Daten und/oder von auf den Daten basierenden Informationen und/oder Warnungen, insbesondere an die Bedienvorrichtung bzw. das Smartphone, ausgebildet ist. Die Übermittlung kann unmittelbar, also direkt an die Bedienvorrichtung, oder mittelbar, beispielsweise über ein Mobilfunknetz, einen Server und/oder eine Datenbank, erfolgen. Hierdurch ist eine optimierte Steuerung bzw. Bedienung ermöglicht.

Gemäß einem weiteren, nicht beanspruchten Aspekt betrifft die vorliegende Offenbarung eine Spülvorrichtung zur automatischen Durchführung von Hygienespülungen in einem Trinkwassersystem. Insbesondere kann die Spülvorrichtung die zuvor im Zusammenhang mit dem System beschriebenen Merkmale aufweisen, auch unabhängig von dem System. Die Spülvorrichtung des Systems ist vorzugsweise wie nachfolgend beschrieben ausgebildet.

Vorzugsweise weist die Spülvorrichtung einen Adapter zum fluidischen Anschließen der Spülvorrichtung an einen Auslauf einer Auslaufarmatur des Trinkwassersystems auf. Dies ist vorteilhaft für eine einfache Installation und Deinstallation der Spülvorrichtung und ermöglicht einen flexiblen bzw. vielseitigen Einsatz der Spülvorrichtung.

Die Spülvorrichtung ist vorzugsweise dazu ausgebildet, sich in Abhängigkeit eines Drucks bzw. Wasserdrucks bzw. Leitungsdrucks in den Trinkwassersystemen bzw. der Auslaufarmatur einzuschalten und/oder auszuschalten. Hierdurch können Fehler beim Betrieb der Spülvorrichtung verhindert bzw. minimiert und/oder der Wasserverbrauch minimiert werden.

Vorzugsweise wird die Spülvorrichtung in Abhängigkeit von einem Füllstand gesteuert. Insbesondere wird die Spülvorrichtung bzw. eine Hygienespülung in Abhängigkeit von dem Füllstand gestoppt. So kann vorgesehen sein, dass ein laufender Spülvorgang bei Erkennung eines Füllstands unterbrochen oder beendet wird. Alternativ oder zusätzlich werden zukünftige oder weitere Hygienespülungen unterbunden, wenn der Füllstand erkannt wird bzw. eine bestimmte Höhe erreicht oder überschreitet. Bei dem Füllstand handelt es sich insbesondere um den Füllstand eines der Spülvorrichtung zugeordneten Beckens, beispielsweise in Form eines Waschbeckens oder einer Badewanne, dessen Füllstand erkannt wird, bevorzugt mit einem Füllstandssensor der Spülvorrichtung. Insbesondere wird der Spülvorgang abgebrochen oder beendet bzw. unterbunden, wenn ein bestimmter Füllstand erreicht oder überschritten wird und/oder wenn ein dem Füllstand entsprechender Wasserspiegel die Spülvorrichtung bzw. den Füllstandssensor erreicht oder überschreitet. Auf diese Weise kann insbesondere bei der bevorzugt freihängenden bzw. nur einseitig, nämlich an eine Auslaufarmatur, angeschlossenen Spülvorrichtung das Überlaufen des dieser zugeordneten oder zuordenbaren Beckens vermieden werden.

Vorzugsweise weist die Spülvorrichtung eine Steuerung auf, die dazu ausgebildet ist, Daten von einer oder mehreren Hygienespülungen aufzuzeichnen und auf Basis der Daten Einstellungen zum Durchführen von Hygienespülungen vorzunehmen, zu verändern und/oder Abweichungen bzw. Unregelmäßigkeiten in den Daten zu erkennen. Dies erhöht die Betriebssicherheit der Spülvorrichtung und/oder erleichtert eine korrekte Einstellung der Spülvorrichtung.

Bevorzugt weist die Spülvorrichtung einen Füllstandssensor auf. Weiter ist die Spülvorrichtung dazu ausgebildet, bei Erkennung eines Füllstands, insbesondere bei Erreichen oder Überschreiten des Füllstandssensors mit einem Wasserspiegel, eine laufende Hygienespülung zu stoppen oder zu unterbrechen und/oder (weitere) Hygienespülungen zu unterbinden und/oder eine Mitteilung, insbesondere Warnung, zu generieren, auszugeben und/oder zu übermitteln. In vorteilhafter Weise kann hierdurch verhindert werden, dass, beispielsweise bei einem verstopften Abfluss, das bei der Hygienespülung abgelassene Wasser in unbeabsichtigter Weise überläuft. Dieser Aspekt der vorliegenden Erfindung ist besonders vorteilhaft bei dem vorliegenden Hygienespüler zum lediglich einseitigen Anschluss an eine Auslaufarmatur mit einem offenen Auslauf, der in ein Becken gerichtet sein oder werden kann. Sollte der Becken-Abfluss einmal blockiert sein, verhindert der vorliegende Aspekt zuverlässig ein Überlaufen.

Der Adapter ist vorzugsweise von der Spülvorrichtung abnehmbar. Dies ist vorteilhaft für einen vielseitigen Einsatz der Spülvorrichtung.

Vorzugsweise ist die Spülvorrichtung durch eine lineare Bewegung an den Adapter anschließbar und/oder von dem Adapter abnehmbar. Insbesondere ist die Spülvorrichtung auf den Adapter aufschiebbar oder aufsteckbar und/oder ist zum Anschließen der Spülvorrichtung an den Adapter und/oder zum Trennen der Spülvorrichtung von dem Adapter keine Drehung erforderlich. Dies ist förderlich für eine schnelle und komfortable Installation und Deinstallation der Spülvorrichtung.

Gemäß einem weiteren, nicht beanspruchten Aspekt betrifft die vorliegende Offenbarung ein Verfahren zum automatischen Durchführen von Hygienespülungen in einem Trinkwassersystem mit einer Spülvorrichtung.

Das System bzw. die Spülvorrichtung ist vorzugsweise zur Durchführung des Verfahrens ausgebildet.

Gemäß einem Aspekt des Verfahrens werden die Daten von einer oder mehreren Hygienespülungen aufgezeichnet, wobei die Spülvorrichtung auf Basis der Daten Einstellungen zum Durchführen von Hygienespülungen vornimmt, verändert und/oder Abweichungen bzw. Unregelmäßigkeiten in den Daten erkennt. Dies erhöht die Betriebssicherheit der Spülvorrichtung und/oder erleichtert eine korrekte oder optimale Einstellung der Spülvorrichtung.

Gemäß einem weiteren Aspekt schaltet sich die Spülvorrichtung in Abhängigkeit eines Drucks in dem Trinkwassersystem bzw. der Auslaufarmatur ein und/oder aus. Hierdurch können Fehler beim Betrieb der Spülvorrichtung verhindert bzw. minimiert und/oder der Wasserverbrauch minimiert werden.

Die aufgezeichneten Daten umfassen vorzugsweise einen Druck, eine Temperatur und/oder einen Volumenstrom, insbesondere als Funktion einer Zeit.

Vorzugsweise übermittelt die Spülvorrichtung die Daten und/oder auf den Daten basierende Informationen und/oder Warnungen, insbesondere an eine Bedienvorrichtung oder eine sonstige Einrichtung wie eine Datenbank oder einen Server.

Ein "Trinkwassersystem" im Sinne der vorliegenden Erfindung ist vorzugsweise ein Rohrleitungssystem zur Bereitstellung von Trinkwasser. Das Rohrleitungssystem umfasst vorzugsweise mehrere Rohrleitungen und/oder mehrere Ausläufe bzw. Entnahmeanschlüsse zur Entnahme von Trinkwasser. Insbesondere bezeichnet der Begriff "Trinkwassersystem" ein Rohrleitungssystem in einem Gebäude zur Versorgung des Gebäudes bzw. mehrerer Räume und/oder Wasseranschlüsse des Gebäudes mit Trinkwasser.

Unter einer "Hygienespülung" im Sinne der vorliegenden Erfindung wird insbesondere das Spülen einer, mehrerer oder aller Leitungen des Trinkwassersystems bzw. der Austausch von Wasser in einer, mehreren oder allen Leitungen des Trinkwassersystems verstanden.

Der Begriff "Auslaufarmatur" bezeichnet vorzugsweise einen Anschluss bzw. eine Armatur des Trinkwassersystems, über den bzw. die Wasser aus dem Trinkwassersystem entnehmbar ist. Insbesondere weist eine Auslaufarmatur einen Auslauf für das zu entnehmende Wasser auf. Eine Auslaufarmatur kann beispielsweise durch einen Wasserhahn, eine Badewannenarmatur, eine Küchenarmatur, eine Duscharmatur o. dgl. gebildet sein.

Ein "Temperaturveriauf" im Sinne der vorliegenden Erfindung ist insbesondere ein Verlauf einer Temperatur, vorzugsweise von Wasser, das bei der Hygienespülung die Spülvorrichtung, mit der die Hygienespülung durchgeführt wird, durchläuft. Ein Temperaturverlauf im Sinne der vorliegenden Erfindung weist vorzugsweise mindestens zwei Temperaturen bzw. Temperaturmesswerte auf, die zu unterschiedlichen Zeiten gemessen wurden bzw. zu unterschiedlichen Zeiten korrespondieren. Vorzugsweise weist ein Temperaturverlauf eine Vielzahl von Temperaturen bzw. Temperaturmesswerten auf, die jeweils zu verschiedenen Zeiten gemessen wurden.

Der Temperaturverlauf kann kontinuierlich oder durch eine Vielzahl von (zeitlich beanstandeten) Einzelmessungen gemessen werden.

Ein "Temperaturverlauf einer Hygienespülung" im Sinne der vorliegenden Erfindung ist insbesondere der Temperaturverlauf des Wassers, das bei der Hygienespülung die Spülvorrichtung, mit der die Hygienespülung durchgeführt wird, durchläuft.

Die oben genannten Aspekte und Merkmale sowie weitere sich aus den Ansprüchen und der nachfolgenden Beschreibung ergebenden Aspekte und Merkmale können unabhängig voneinander und in jeder beliebigen Kombination realisiert werden.

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Es zeigt:
- Fig. 1: eine schematische Darstellung eines Systems mit einer Auslaufarmatur und einer daran angeschlossenen Spülvorrichtung;
- Fig. 2: eine schematische, blockschaltbildartige Darstellung des Systems;
- Fig. 3: eine weitere schematische Darstellung des Systems;
- Fig. 4: eine schematische, perspektivische Explosionsdarstellung einer Spülvorrichtung; und
- Fig. 5: eine schematische Seitenansicht einer Spülvorrichtung.

In den teilweise nicht maßstabsgerechten, nur schematischen Figuren werden für gleiche oder ähnliche Teile die gleichen Bezugszeichen verwendet, wobei entsprechende oder vergleichbare Eigenschaften und Vorteile erreicht werden können, auch wenn von einer wiederholten Beschreibung abgesehen wird.

In den Figuren ist ein erfindungsgemäßes System 1 jeweils schematisch dargestellt.

Das System 1 weist eine Auslaufarmatur 2 und eine Spülvorrichtung 3 auf.

Die Spülvorrichtung 3 kann grundsätzlich auch unabhängig von dem System bzw. der Auslaufarmatur 2 realisierbar sein und insbesondere unabhängig von dem System 1 und/oder der Auslaufarmatur 2 eine eigenständige Erfindung bilden.

Das System 1 bzw. die Auslaufarmatur 2 ist vorzugsweise an ein Rohrleitungssystem bzw. Trinkwassersystem 4 angeschlossen bzw. fluidisch damit verbunden.

Die Spülvorrichtung 3 ist dazu ausgebildet, Hygienespülungen in dem Trinkwassersystem 4 durchzuführen bzw. zu veranlassen bzw. zu steuern.

Vorzugsweise ist die Spülvorrichtung 3 an die Auslaufarmatur 2 fluidisch angeschlossen bzw. anschließbar. Insbesondere ist die Spülvorrichtung 3 an einen Auslauf 2A der Auslaufarmatur 2 bzw. auslaufseitig an die Auslaufarmatur 2 anschließbar, insbesondere daran anschraubbar.

Insbesondere wird durch die Auslaufarmatur 2 und die darin angeschlossene Spülvorrichtung 3 eine durchgängige fluidische Verbindung bzw. ein Fluidweg F gebildet, insbesondere dergestalt, dass Wasser aus dem Trinkwassersystem 4 durch die Auslaufarmatur 2 und die Spülvorrichtung 3 hindurchtreten und - wenn die Spülvorrichtung 3 an die Auslaufarmatur 2 angeschlossen ist - (nur) über die Spülvorrichtung 3 aus dem Trinkwassersystem 4 austreten kann.

Die Spülvorrichtung 3 ist vorzugsweise mobil. Besonders bevorzugt ist die Spülvorrichtung 3 werkzeuglos an die Auslaufarmatur 2 anschließbar bzw. mit der Auslaufarmatur 2 verbindbar und/oder von der Auslaufarmatur 2 abnehmbar bzw. trennbar.

Es ist vorzugsweise vorgesehen, die Spülvorrichtung 3 nicht dauerhaft zu installieren bzw. in das Trinkwassersystem 4 einzubinden, sondern nur temporär, insbesondere über einen Zeitraum von wenigen Tagen oder Wochen, einzusetzen. Hierzu ist es vorteilhaft, wenn die Spülvorrichtung 3 möglichst einfach und/oder schnell installiert bzw. deinstalliert werden kann.

Das System 1 bzw. die Spülvorrichtung 3 weist vorzugsweise einen Adapter 5 zum Anschluss an die Auslaufarmatur 2 auf. Der Adapter 5 bildet vorzugsweise einen Teil der Spülvorrichtung 3. Der Adapter 5 ist vorzugsweise zur Herstellung einer fluidischen Verbindung zwischen der Spülvorrichtung 3 und der Auslaufarmatur 2 bzw. deren Auslauf 2A ausgebildet. Insbesondere ist der Adapter 5 von der Spülvorrichtung 3 abnehmbar.

Der Adapter 5 bildet vorzugsweise eine Schnellkupplung bzw. Schlauchkupplung. Der Adapter 5 kann an den Auslauf 2A durch Herstellung einer Schraubverbindung fluidisch kuppelbar sein und auf einer anderen Seite zur Herstellung einer Steckverbindung mit der Spülvorrichtung 3 ausgebildet sein. Hier kann der Adapter 5 ein erstes und die Spülvorrichtung 3 ein korrespondierendes zweites Schellkupplungselement aufweisen. Die Stellkupplungselemente sind vorzugsweise dazu ausgebildet, durch ein Ineinanderschieben oder Ineinanderstecken, insbesondere mit einer (lediglich) linearen Bewegung, eine durchgehende fluidische Verbindung zur erzeugen, sodass die Spülvorrichtung 3 an die Auslaufarmatur 2 derart anschließbar ist, dass bei Ventilöffnungen der Auslaufarmatur 2 eine durchgehend fluidische Verbindung von dem Trinkwassersystem 4 zu der Spülvorrichtung 3 erzeugbar ist.

Vorzugsweise ist die Spülvorrichtung 3 von der Auslaufarmatur 2 gehalten. Besonders bevorzugt ist die Spülvorrichtung 3 starr bzw. unschwenkbar an die Auslaufarmatur 2 angeschlossen oder anschließbar, insbesondere mittels des Adapters 5.

"Starr" bedeutet in diesem Zusammenhang vorzugsweise, dass die Abgaberichtung des Auslasses 7, also die Richtung, in die die Spülvorrichtung 3 Wasser abgibt oder abgeben kann, durch Anschluss der Spülvorrichtung 3 an der Auslaufarmatur 2, insbesondere mittels des Adapters 5, festlegbar ist, und zwar bevorzugt so, dass diese jedenfalls durch Wasserdruck einer Versorgungsleitung, insbesondere bis zu 5 bar, nicht veränderbar ist.

Die Spülvorrichtung 3 ist an der Auslaufarmatur 2 vorzugsweise ortsfest gehalten bzw. haltbar. Es ist jedoch möglich, dass die Spülvorrichtung 3 um eine Achse rotierbar ist, die durch die Hauptflussrichtung des Wassers durch den Adapter 5 bzw. die Spülvorrichtung 3 definiert ist.

In einem weiteren Aspekt kann die Spülvorrichtung 3 und/oder der Adapter 5 ein Gelenk zur Ausrichtung der Spülvorrichtung 3 in Bezug auf die Auslaufarmatur 2 aufweisen (nicht dargestellt). Ein derartiges Gelenk ist vorzugsweise selbsthemmend ausgebildet. Hierdurch wird vermieden, dass ein durch den Auslass 7 abgegebener oder abgebbarer Wasserstrahl die Auslassrichtung des Auslasses 7 beeinflussen kann.

Vorzugsweise weist die Auslaufarmatur 2 einen Perlator bzw. Strahlregler 2B auf, der an dem Auslauf 2A angeordnet bzw. auf den Auslauf 2A aufgeschraubt ist. Zum Anschluss der Spülvorrichtung 3 an die Auslaufarmatur 2 wird vorzugsweise zunächst der Strahlregler 2B von dem Auslauf 2A getrennt, insbesondere abgeschraubt. Dann wird vorzugsweise der Adapter 5 mit dem Auslauf 2A verbunden, insbesondere auf den Auslauf 2A aufgeschraubt oder in den Auslauf 2A eingeschraubt. Vorzugsweise wird anschließend die Spülvorrichtung 3, insbesondere der Einlass 6, mit dem Adapter 5 verbunden bzw. an dem Adapter 5 angeschlossen.

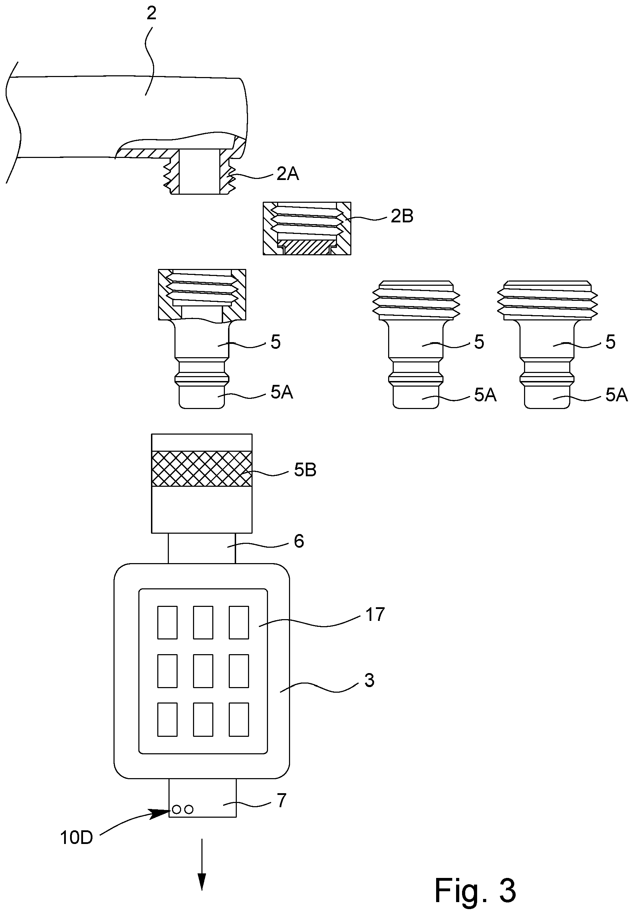

In Figur 3 sind beispielhaft mehrere Ausführungsformen eines Adapters 5 dargestellt. Insbesondere sind verschiedene Adapter 5 an dem der Auslaufarmatur 2 bzw. dem Auslauf 2A zugeordneten Ende unterschiedlich ausgebildet, sodass verschiedene Adapter 5 an verschiedene Auslaufarmaturen 2 bzw. Ausläufe 2A anschließbar sind. Hierzu können beispielsweise an verschiedenen Adaptern 5 verschiedene Gewinde, wie etwa Innengewinde, Außengewinde oder Gewinde mit unterschiedlichen Durchmessern und/oder Gewindesteigungen, vorgesehen sein. Vorzugsweise sind verschiedene Adapter 5 an dem der Spülvorrichtung 3 zugeordneten Ende identisch ausgebildet.

Vorzugsweise bildet die Spülvorrichtung 3 mit einem Adapter 5 oder mehreren verschiedenen Adaptern 5 ein Kit, insbesondere einen Verbund mit gemeinsamer Verpackung und/oder Anleitung.

Vorzugsweise weist der Adapter 5 an der der Spülvorrichtung 3 bzw. dem Einlass 6 zugeordneten Seite einen Nippel 5A als erstes Schnellkupplungselement auf.

Die Spülvorrichtung 3 weist vorzugsweise einlassseitig ein Kupplungsteil 5B als zweites Kupplungselement auf. Mit diesem Kupplungsteil 5B ist die Spülvorrichtung 3 vorzugsweise derart mit dem Adapter 5 koppelbar, dass die Spülvorrichtung 3 durch den Adapter 5 fluidisch mit dem Auslauf 2A verbunden und die gleichzeitig an dem Auslauf 2A gehalten wird.

Der Adapter 5 bzw. der Nippel 5A und das dem Adapter 5 zugeordnete Kupplungsteil 5B der Spülvorrichtung 3 bilden vorzugsweise eine Schnellkupplung.

Vorzugweise ist die Spülvorrichtung 3 durch eine lineare Bewegung mit dem Adapter 5 verbindbar und/oder von dem Adapter 5 trennbar.

Insbesondere ist die Spülvorrichtung 3 durch Aufschieben des Kupplungsteils 5B auf den Nippel 5A mit dem Adapter 5 verbindbar bzw. an den Adapter 5 anschließbar. Insbesondere ist zum Anschließen der Spülvorrichtung 3 an den Adapter 5 keine Drehbewegung erforderlich.

Das Kupplungsteil 5B ist vorzugsweise durch Bewegung eines bevorzugt ringförmigen Betätigungsteils lösbar. Zum Trennen der Spülvorrichtung 3 von dem Adapter 5 wird das Betätigungsteil in Richtung der Spülvorrichtung 3 bewegt bzw. von dem Adapter 5 wegbewegt. Hierdurch wird vorzugsweise die Verbindung zwischen dem Nippel 5A und dem Kupplungsteil 5B gelöst und die Spülvorrichtung 3 kann, insbesondere durch eine lineare Bewegung von dem Adapter 5 weg, von dem Adapter 5 entfernt werden.

Es ist grundsätzlich auch möglich, dass die Spülvorrichtung 3 ohne Verwendung eines Adapters 5 direkt mit der Auslaufarmatur 2 bzw. dem Auslauf 2A verbunden wird. Die Verwendung des Adapters 5 hat jedoch den Vorteil, dass die Spülvorrichtung 3 bei unterschiedlichen Auslaufarmaturen 2 bzw. der Auslaufarmaturen 2 mit unterschiedlich ausgestalteten Ausläufen 2A eingesetzt werden kann.

Die Spülvorrichtung 3 weist vorzugsweise einen Einlass 6 und einen Auslass 7 auf. Der Einlass 6 ist vorzugsweise an die Auslaufarmatur 2 anschließbar oder angeschlossen, insbesondere auslaufseitig. In einem bevorzugten Ausführungsbeispiel, das auch in den Figuren dargestellt ist, ist der Einlass 6 nicht unmittelbar an die Auslaufarmatur 2 angeschlossen, sondern mittelbar über den Adapter 5. Hier sind jedoch auch andere Lösungen möglich.

Der Auslass 7 bildet vorzugsweise ein freies bzw. offenes Ende der Spülvorrichtung 3. Es ist insbesondere vorgesehen, dass der Auslass 7 nicht an eine Abflussleitung o. dgl. angeschlossen wird oder ist.

Der Auslass 7 der an die Auslaufarmatur 2 angeschlossenen Spülvorrichtung 3 ist vorzugsweise in ein der Auslaufarmatur 2 zugeordnetes Becken 8 gerichtet oder richtbar. Das Becken 8 ist vorzugsweise durch ein Spülbecken, ein Waschbecken, eine Duschtasse bzw. Duschwanne, eine Badewanne o. dgl. gebildet.

Die Auslaufarmatur 2 kann an eine oder mehrere Leitungen 4A des Trinkwassersystems 4 angeschlossen sein, insbesondere eine Kaltwasserleitung und eine Warmwasserleitung.

Die Auslaufarmatur 2 weist ein oder mehrere Ventile 2C auf, die über eine oder mehrere Bedieneinrichtungen 2D der Auslaufarmatur 2 steuerbar bzw. öffenbar und schließbar sind. Vorzugsweise ist jeder Leitung 4A ein Ventil 2C zugeordnet. Die Bedieneinrichtung 2D kann zum gleichzeitigen Bedienen mehrerer Ventile 2C ausgebildet sein, beispielsweise wenn die Auslaufarmatur 2 durch einen Einhebelmischer o. dgl. gebildet ist.

Die Spülvorrichtung 3 weist vorzugsweise ein zwischen dem Einlass 6 und dem Auslass 7 angeordnetes Ventil 9 auf. Vorzugsweise ist das Ventil 9 als steuerbares Ventil und/oder als Magnetventil ausgebildet. Das Ventil 9 ist vorzugsweise stromlos geschlossen bzw. geschlossen, wenn kein Strom fließt und/oder keine Spannung anliegt.

Das Ventil 9 weist vorzugsweise einen Ventilkopf 9A auf.

Gemäß einem bevorzugten Ausführungsbeispiel ist das Ventil 9 elektrisch steuerbar und/oder bistabil. Ein bistabiles Ventil ist insbesondere ein Ventil, das zwei stabile Zustände, insbesondere einen stabilen geschlossenen Zustand und einen stabilen geöffneten Zustand, aufweist.

Vorzugsweise ist das Ventil 9 ein Kartuschenventil, insbesondere ein Magnetventil in Form eines Kartuschenventils. Die Verwendung eines Kartuschenventils als Ventil 9 hat sich als besonders vorteilhaft erwiesen, da hierdurch eine kompakte Bauform und eine einfache Herstellung der Spülvorrichtung 3 ermöglicht sind.

Zum Betrieb der Spülvorrichtung 3 bzw. zum Durchführen von Hygienespülungen wird vorzugsweise die Spülvorrichtung 3, insbesondere mit dem Adapter 5, zunächst an die Auslaufarmatur 2 angebracht bzw. an der Auslaufarmatur 2 angeschlossen. Dann werden die Ventile 2C der Auslaufarmatur 2 geöffnet, insbesondere mittels der Bedieneinrichtung 2D, so dass Wasser aus dem Trinkwassersystem 4 bzw. den Leitungen 4A durch die Auslaufarmatur 2 hindurchtreten und in die Spülvorrichtung 3 eintreten kann. Zum Durchführen einer Hygienespülung wird das Ventil 9 der Spülvorrichtung 3 geöffnet, so dass Wasser aus der Auslaufarmatur 2 und der Spülvorrichtung 3 austritt. Das Wasser tritt dann aus dem Auslass 7 aus und fällt vorzugsweise in ein der Auslaufarmatur 2 zugeordnetes Becken 8, über welches das ausgetretene Wasser schließlich abgeleitet wird.

Die Spülvorrichtung 3 weist einen oder mehrere Sensoren 10, nämlich einen Temperatursensor 10C und insbesondere einen Drucksensor 10A, einen Volumenstromsensor 10B und/oder einen Füllstandssensor 10D auf. Der Drucksensor 10A, Volumenstromsensor 10B und Temperatursensor 10C sind zur Messung des Drucks, des Volumenstroms bzw. der Temperatur des Wassers in dem Fluidweg F bzw. in der Spülvorrichtung 3 ausgebildet und/oder entsprechend angeordnet.

Des Weiteren kann die Spülvorrichtung 3, insbesondere zusätzlich zu dem Temperatursensor 10C, einen Umgebungstemperatursensor 10E aufweisen. Der Temperatursensor 10C ist zur Messung der Temperatur des Wassers, das während einer Hygienespülung die Spülvorrichtung 3 durchläuft, ausgebildet. Der Temperatursensor 10C steht vorzugsweise in thermischem Kontakt mit wasserführenden Teilen der Spülvorrichtung 3 und/oder ist innerhalb des Fluidwegs F angeordnet. Im Gegensatz hierzu ist der Umgebungstemperatursensor 10E vorzugsweise dazu ausgebildet, die Umgebungstemperatur der Spülvorrichtung 3 zu messen.

Der Drucksensor 10A ist vorzugsweise zwischen dem Ventil 9 und dem Einlass 6 angeordnet.

Der Volumenstromsensor 10B und/oder der Temperatursensor 10C sind vorzugsweise zwischen dem Ventil 9 und dem Auslass 7 angeordnet.

Vorzugsweise ist die Spülvorrichtung 3 dazu ausgebildet, sich in Abhängigkeit eines Drucks in dem Trinkwassersystem 4 bzw. der Auslaufarmatur 2 einzuschalten und/oder auszuschalten. Insbesondere ist die Spülvorrichtung 3 dazu ausgebildet, sich in Abhängigkeit eines mit dem Drucksensor 10A gemessenen Drucks bzw. in Abhängigkeit von Signalen oder Messdaten des Drucksensors 10A einzuschalten und/oder auszuschalten.

Unter einem "Ein/Ausschalten" der Spülvorrichtung 3 ist vorzugsweise ein Aktivieren eines Betriebszustands und/oder ein Versetzen der Spülvorrichtung 3 in einen Betriebszustand zu verstehen, in dem die Steuerung 12 nach vorgegebenen oder vorgebbaren Kriterien das Ventil 9 betätigen kann bzw. betätigt, sodass eine durchgehende Verbindung zwischen dem Einlass 6 und dem Auslass 7 der Spülvorrichtung 3 geöffnet und geschlossen wird.

Unter einem "Ausschalten" ist vorzugsweise das Deaktivieren eines nach dem Einschalten angenommenen Betriebszustands zu verstehen bzw. das Versetzen der Spülvorrichtung 3 in einen Betriebszustand, in dem sich die Spülvorrichtung 3 vor dem Einschalten befand.

Die Begriffe Ausschalten bzw. Einschalten umfassen vorzugsweise auch das Aktivieren bzw. Deaktivieren eines Energiesparmodus bzw. Sleep Modes.

In einer bevorzugten Variante ist die Spülvorrichtung 3 dazu ausgebildet, in einen Energiesparmodus bzw. Sleep Mode zu versetzt zu werden, wenn der Druck im Einlass 6 zumindest im Wesentlichen dem Umgebungsdruck entspricht oder diesen erreicht. Ferner ist die Spülvorrichtung 3 dazu ausgebildet, bei Überdruck im Einlass 6 im Vergleich zum Umgebungsdruck diesen Energiesparmodus bzw. Sleep Mode zu verlassen.

Alternativ oder zusätzlich kann vorgesehen sein, dass die Spülvorrichtung 3 dazu ausgebildet ist, die Steuerung 12 vollständig oder teilweise von einer Energieversorgungseinrichtung 13 zu trennen, wenn der Druck zumindest im Wesentlichen dem Umgebungsdruck entspricht oder diesen erreicht und die Energieversorgung herzustellen, wenn im Einlass 6 ein Überdruck im Vergleich zum Umgebungsdruck der Spülvorrichtung 3 im Einlass 6 erzeugt oder erreicht wird. Insbesondere entspricht dies einem automatischen Aus- bzw. Einschalten der Spülvorrichtung 3 (auf Basis des Drucks).

Vorzugsweise ist die Spülvorrichtung 3 dazu ausgebildet, sich einzuschalten, wenn der Druck einen Schwellwert überschreitet und/oder auszuschalten, wenn der Druck einen Schwellwert unterschreitet. Auf diese Weise ist es nicht erforderlich, die Spülvorrichtung 3 nach dem Anschließen an die Auslaufarmatur 2 einzuschalten, sondern das Einschalten der Spülvorrichtung 3 kann automatisch bzw. durch die Spülvorrichtung 3 selbst erfolgen, insbesondere durch Wasserdruck bei Öffnen des oder der Ventile 2C der Auslaufarmatur 2.

Bevorzugt wird nach dem Anschließen der Spülvorrichtung 3 an die Auslaufarmatur 2 die Auslaufarmatur 2 bzw. deren Ventile 2C geöffnet, so dass der in dem Trinkwassersystem 4 bzw. den Leitungen 4A herrschende Druck auch in der Auslaufarmatur 2 und der Spülvorrichtung 3 bzw. dem einlassseitigen Abschnitt des Fluidwegs F in der Spülvorrichtung 3 anliegt. Vorzugsweise schaltet sich die Spülvorrichtung 3 ein, wenn dieser Druck gemessen wird bzw. einen Schwellwert überschreitet.

Zur Deinstallation der Spülvorrichtung 3 wird vorzugsweise zunächst die Auslaufarmatur 2 bzw. werden zunächst deren Ventile 2C geschlossen. Dann kann die Spülvorrichtung 3 von der Auslaufarmatur 2 abgenommen werden, so dass in der Spülvorrichtung 3 bzw. deren Fluidweg F kein Druck mehr herrscht bzw. der Druck den Schwellwert unterschreitet. Vorzugsweise schaltet sich die Spülvorrichtung 3 in diesem Fall (automatisch) aus. Die Spülvorrichtung 3 muss vorzugsweise also nicht manuell ausgeschaltet werden. Dies ist einer einfachen Bedienung zuträglich und es kann auch nicht vergessen werden, die Spülvorrichtung 3 auszuschalten.

Der Füllstandssensor 10D ist vorzugsweise dazu ausgebildet, einen der Spülvorrichtung 3 zugeordneten Füllstand zu detektieren. Dieser Füllstand ist vorzugsweise durch mittels der Spülvorrichtung 3 abgebbares Wasser jedenfalls unter bestimmten Voraussetzungen veränderbar. So ist der Füllstandssensor 10D insbesondere dazu ausgebildet, einen aufgrund einer teilweisen oder vollständigen Blockade eines Abflusses 8A steigenden Wasserspiegel L zu erkennen.

Hintergrund eines derartigen steigenden Wasserspiegels L ist die bevorzugte Verwendung der vorschlagsgemäßen Spülvorrichtung 3 derart, dass der Auslass 7 ein offenes Ende der Spülvorrichtung 3 bildet und folglich mit der Spülvorrichtung 3 Wasser in den offenen Raum abgegeben wird. Dieser offene Raum ist bevorzugt durch das Becken 8 begrenzt, welches abgebbares oder abgegebenes Wasser auffängt und über einen Abfluss 8A einer Kanalisation zuführt. Wenn dieser Abfluss 8A vollständig oder teilweise blockiert ist, kann es dazu kommen, dass in dem Becken 8 der Wasserspiegel L ansteigt und möglicherweise ein Überlaufen des Beckens 8 droht. Der Füllstandssensor 10D ist vor diesem Hintergrund dazu ausgebildet, einen Füllstand des Wasserspiegels L zu detektieren oder zu erkennen.

Die Spülvorrichtung 3 ist weiter bevorzugt dazu ausgebildet, in Abhängigkeit von dem Füllstand bevorzugt vollautomatisch gestoppt zu werden. Insbesondere wird die Spülvorrichtung 3 dadurch gestoppt, dass das Ventil 9 geschlossen wird. So ist es insbesondere vorgesehen, dass die Spülvorrichtung 3 bei Erkennung eines Füllstands und insbesondere bei Erreichen oder Überschreiten des Füllstandssensors 10D mit dem Wasserspiegel L eine laufende Hygienespülung stoppt oder unterbricht und/oder (weitere) Hygienespülungen unterbindet, insbesondere durch Schließen des Ventils 9. Auf diese Weise wird vermieden, dass das Becken 8 überläuft.

Unter einem "Unterbinden" (weiterer) Hygienespülungen ist insbesondere zu verstehen, dass keine weiteren Hygienespülungen durchgeführt bzw. begonnen werden, insbesondere dadurch, dass das Ventil 9 geschlossen bleibt.

Wie bereits angedeutet, kann bei Erreichen oder Überschreiten des Füllstandssensors 10D mit dem Wasserspiegel L eine laufende Hygienespülung gestoppt oder unterbrochen werden. Insbesondere kann also auch vorgesehen sein, dass eine laufende Hygienespülung lediglich unterbrochen wird, insbesondere also fortgesetzt wird, wenn der Wasserspiegel L in dem Becken 8 wieder sinkt bzw. der Füllstandssensor 10D nicht weiter erreicht oder überschritten wird. Die Spülvorrichtung 3 kann insbesondere dazu ausgebildet sein, das Ventil 9 in Abhängigkeit des Füllstandssensors 10D (wieder) zu öffnen.

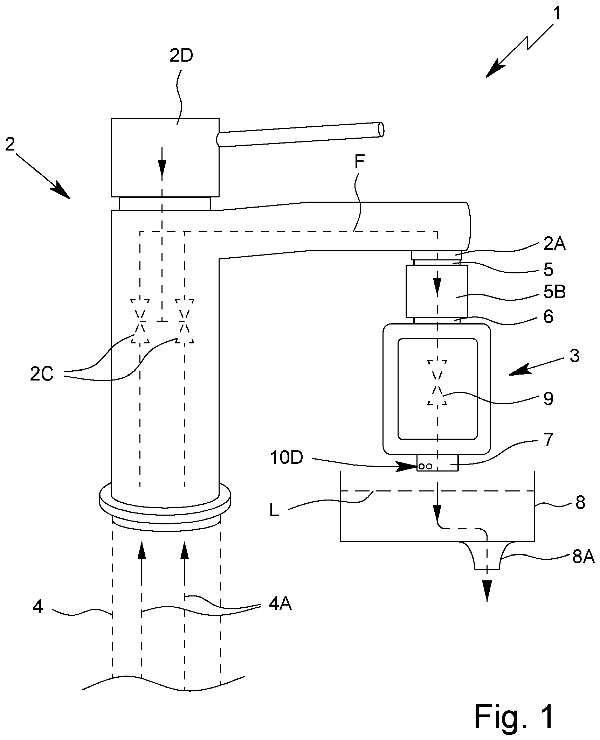

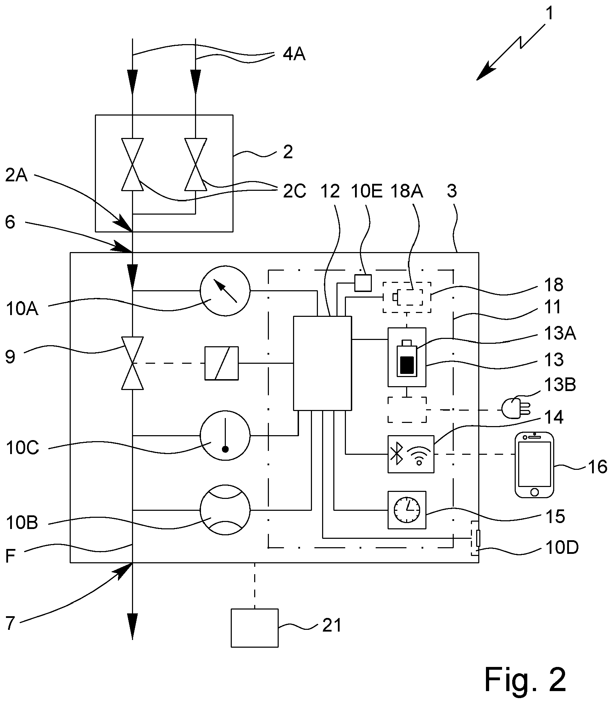

Im Darstellungsbeispiel gemäß der Fig. 1, 2 und 3 weist der Füllstandssensor 10D ein Elektrodenpaar auf und der Füllstandssensor 10D ist dazu ausgebildet, bei Überbrückung dieser Elektroden mit Feuchtigkeit oder Wasser einen Füllstand auf dem Level der Elektroden zu detektieren. Daraufhin kann die laufende Hygienespülung gestoppt oder unterbrochen werden und/oder können zukünftige Hygienespülungen unterbunden werden.

Grundsätzlich kommen jedoch auch andere Konzepte zur Realisierung des Füllstandssensors 10D in Betracht. So kann die Spülvorrichtung 3 alternativ oder zusätzlich einen optischen, akustischen, kapazitiven, induktiven und/oder durch einen Schwimmersensor bzw. -schalter realisierten Füllstandssensor 10D aufweisen.

Bei einem optischen Füllstandssensor 10D kann es sich beispielsweise um eine Lichtschranke zur Erkennung des Wasserspiegels L handeln. Alternativ oder zusätzlich kann es sich um einen Füllstandssensor 10D handeln, der mittels Laser-Abstandsmessung oder einer sonstigen Abstandsmessung den Wasserspiegel L bzw. dessen Veränderungen detektieren kann, so dass basierend hierauf eine Hygienespülung gestoppt, unterbrochen oder unterbunden werden kann.

Ein akustischer Füllstandssensor 10D kann beispielsweise ein Ultraschall-Sensor sein, der zur Detektion des Wasserspiegels L ausgebildet und angeordnet sein kann.

Grundsätzlich kommt auch ein radarbasierter Füllstandssensor 10D in Frage.

Alternativ oder zusätzlich weist die Spülvorrichtung 3 einen Schwimmersensor, insbesondere Schwimmerschalter, auf, der dazu ausgebildet ist, bei Erreichen oder Überschreiten des als Schwimmersensor oder -schalter ausgebildeten Füllstandssensors 10D mit dem Wasserspiegel L eine Abschaltung der Spülvorrichtung 3 bzw. ein Schließen des Ventils 9 zu bewirken.

Grundsätzlich sind auch andere Sensorkonzepte denkbar. Der Füllstandssensor 10D ist bevorzugt jedenfalls dazu geeignet, das Erreichen oder Überschreiten eines Wasserspiegels L in einem Bereich zu detektieren, in den der Auslass 7 der Spülvorrichtung 3 mündet.

Der Füllstandssensor 10D ist bevorzugt dazu ausgebildet, einen Abstand, eine Veränderung und/oder ein Erreichen oder Überschreiten eines bestimmten Füllstands mit dem Wasserspiegel L zu detektieren.

Der Füllstandssensor 10D ist bevorzugt auslassseitig und/oder in Auslassrichtung an der Spülvorrichtung 3 angeordnet. Auf diese Weise kann das Erreichen oder Überschreiten eines Füllstandes oder allgemein ein bestimmter Füllstand frühzeitig bzw. zuverlässig erkannt werden.

Grundsätzlich können auch mehrere Füllstandssensoren 10D vorgesehen sein. Hierbei ist die Spülvorrichtung 3 bevorzugt dazu ausgebildet, eine Hygienespülung bzw. einen Spülvorgang zu unterbrechen, zu stoppen oder zu unterbinden, sobald einer der Füllstandssensoren 10D einen Füllstand erkannt hat und/oder eine Mitteilung, insbesondere Warnung, zu generieren, auszugeben und/oder zu übermitteln.

Die Erkennung eines Füllstands im Sinne der vorliegenden Erfindung ist insbesondere das Erkennen eines bestimmten oder des Erreichens bzw. der Überschreitung eines bestimmten Füllstands bzw. Wasserspiegels L, der als Schwellwert vorgegeben sein kann und/oder konstruktionsbedingt vorgegeben oder vorgebbar ist.

Der Füllstandssensor 10D ist insbesondere außenseitig und/oder fluidisch verbunden mit der Außenseite der Spülvorrichtung 3 angeordnet, so dass Feuchtigkeit oder Wasser, die bzw. das den Füllstandssensor 10D erreicht, detektierbar ist bzw. detektiert wird.

Die Spülvorrichtung 3 weist vorzugsweise einen Abstand zwischen Adapter 5 und Auslass 7 von bevorzugt mehr als 5, insbesondere mehr als 7, und/oder weniger als 20, bevorzugt weniger als 15, insbesondere etwa 10 bis 15 cm, auf. Der Füllstandssensor 10D kann auf der dem Auslass 7 zugewandten Seite der Spülvorrichtung 3, bevorzugt weniger als 7 cm, insbesondere weniger als 5 oder 3 cm beabstandet vom Auslass 7 bzw. in Gebrauchslage oberhalb des Auslasses 7 vorgesehen sein. Dies betrifft insbesondere Fälle, bei denen der Füllstandssensor 10D mit Elektroden zur galvanischen Detektion des Füllstands und/oder mit einem Schwimmer bzw. mit einem Schwimmerschalter realisiert ist.

Alternativ oder zusätzlich zu einem Stoppen oder Unterbrechen der Hygienespülung und/oder einer Unterbindung weiterer Hygienespülungen kann die Spülvorrichtung 3 bei Erkennung des Füllstands einen eine Mitteilung bzw. Warnung, insbesondere einen Alarm, erzeugen bzw. hierzu ausgebildet sein. Insbesondere erfolgt eine automatische Benachrichtigung bzw. Fehlerbehandlung.

Die Mitteilung bzw. Warnung bzw. der Alarm kann beispielsweise durch ein optisches und/oder akustisches Signal gebildet sein, das von der Spülvorrichtung 3 abgegeben wird. Alternativ oder zusätzlich kann der Alarm durch ein Signal oder eine Mitteilung gebildet sein, das bzw. die an eine Bedienvorrichtung 16 des Systems 1, auf die später noch genauer eingegangen wird, übermittelt wird, beispielsweise in Form einer SMS oder sonstigen Textnachricht oder einer Push-Mitteilung. Insbesondere kann hierdurch ein Benutzer oder Betreiber unmittelbar informiert werden.

Die Spülvorrichtung 3 weist vorzugsweise eine Elektronikeinheit 11 auf. Die Elektronikeinheit 11 bzw. Spülvorrichtung 3 weist eine Steuerung 12 und einen Zeitmesser 15 (Uhr bzw. Zeitbasis) und vorzugsweise eine Energieversorgungseinrichtung 13 und/oder eine Datenschnittstelle 14 auf.

Vorzugsweise weist die Steuerung 12 einen oder mehrere Prozessoren bzw. Mikroprozessoren auf oder ist hierdurch gebildet. Die Steuerung 12 ist vorzugsweise zur Steuerung der Spülvorrichtung 3 und/oder zum insbesondere automatischen Betrieb der Spülvorrichtung 3 ausgebildet. Vorzugsweise wird das Durchführen der Hygienespülungen mit der Spülvorrichtung 3 durch die Steuerung 12 gesteuert, insbesondere automatisch und oder dadurch, dass die Steuerung 12 das Öffnen und Schließen des Ventils 9 bewirkt, wodurch der Fluidweg F zwischen Einlass 6 und Auslass 7 freigegeben bzw. blockiert wird.

Die Steuerung 12 ist mit dem Temperatursensor 10C und vorzugsweise mit dem Drucksensor 10A, dem Volumenstromsensor 10B und/oder dem Füllstandssensor 10D verbunden. Die Steuerung 12 ist insbesondere dazu ausgebildet, in Abhängigkeit von mit den Sensoren 10 und/oder dem Zeitmesser 15 gemessenen Daten das Ventil 9 zu öffnen und/oder zu schließen.

Besonders bevorzugt ist die Steuerung 12 dazu ausgebildet, von dem oder den Sensoren 10 gemessene Daten bzw. Daten von einer oder mehreren Hygienespülungen aufzuzeichnen und - insbesondere selbstständig - auf Basis der Daten Einstellungen zum Durchführen von zukünftigen Hygienespülungen vorzunehmen, zu verändern, anzupassen, zu optimieren und/oder Abweichungen bzw. Unregelmäßigkeiten in den Daten zu erkennen.

Insbesondere kann die Steuerung 12 selbstlernend ausgebildet sein.

Die Steuerung 12 ist vorzugsweise dazu ausgebildet, auf Basis der Daten festzustellen, ob eine Hygienespülung korrekt durchgeführt wurde bzw. wird.

Vorzugsweise ist die Spülvorrichtung 3 bzw. Steuerung 12 dazu ausgebildet, Unterschiede bzw. Abweichungen zwischen den Daten verschiedener Hygienespülungen zu erkennen.

Die Daten der Sensoren 10, insbesondere der Druck, die Temperatur, und/oder der Volumenstrom, werden vorzugsweise als Funktion einer Zeit gemessen und/oder aufgezeichnet. Hierzu ist der Zeitmesser 15 vorgesehen. Mit anderen Worten ist die Spülvorrichtung 3 bzw. Steuerung 12 dazu ausgebildet, mittels des Temperatursensors 10C und des Zeitmessers 15, die Temperatur als Funktion der Zeit zu messen und aufzuzeichnen.

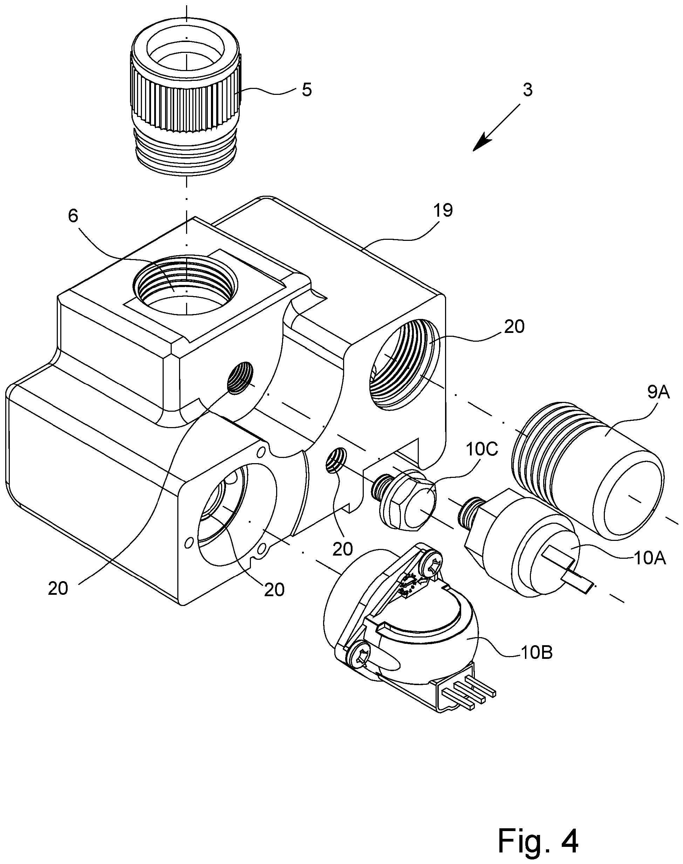

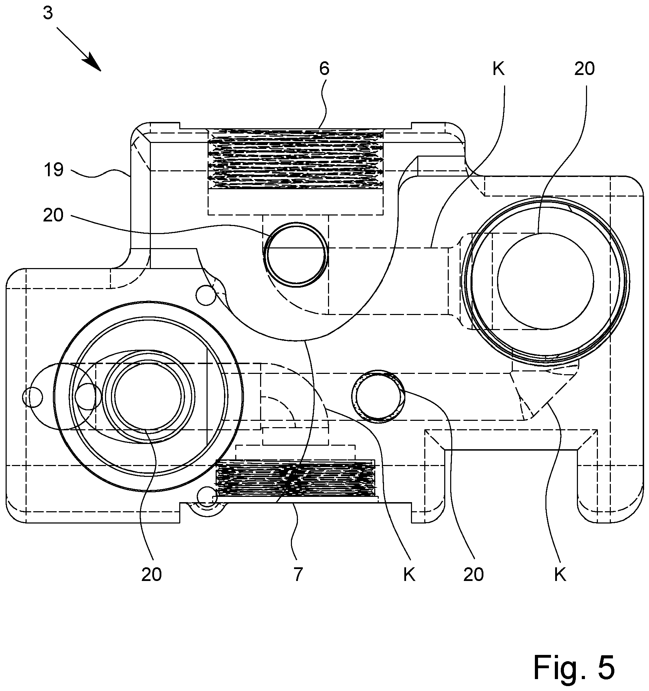

Eine bevorzugte Ausführungsform der Spülvorrichtung 3 ist in den Fig. 4 und 5 schematisch dargestellt.

Die nachfolgenden Erläuterungen beziehen sich insbesondere auf die in den Fig. 4 und 5 dargestellte Ausführungsform der Spülvorrichtung 3. Die vorherigen Erläuterungen gelten jedoch weiterhin auch für die in den Fig. 4 und 5 dargestellte Ausführungsform der Spülvorrichtung 3.

Die Spülvorrichtung 3 weist vorzugsweise ein Gehäuse 19 auf. Das Gehäuse 19 ist vorzugsweise einstückig ausgebildet. Das Gehäuse 19 ist insbesondere durch ein wasserführendes Bauteil bzw. einen wasserführenden Block, insbesondere aus Vollmaterial, gebildet.

Vorzugsweise weist das Gehäuse 19 einen Fluidkanal K auf oder bildet das Gehäuse 19 einen Fluidkanal K. Der Fluidkanal K weist einen Einlass 6 und einen Auslass 7 auf.

Vorzugsweise ist der Fluidkanal K durch eine oder mehrere Ausnehmungen bzw. ein oder mehrere Löcher in dem Gehäuse 19 gebildet. Vorzugsweise ist der Fluidkanal K durch ein sich durchgängig vom Einlass 6 zum Auslass 7 erstreckendes Loch bzw. einen Kanal in dem Gehäuse 19 gebildet. Der Fluidkanal K bzw. das Loch oder die Löcher sind insbesondere durch Bohrungen in dem Gehäuse 19 gebildet.

Grundsätzlich muss der Fluidkanal K jedoch nicht durch eine Bohrung gebildet sein. Es ist beispielsweise auch möglich, das Gehäuse 19 mit dem Fluidkanal K in einem 3D-Druck-Verfahren herzustellen.

Es ist bevorzugt, dass das Gehäuse 19 aus einem Vollmaterial gebildet ist, wobei der Fluidkanal K ein Loch oder eine Ausnehmung oder einen Kanal in dem Vollmaterial darstellt. Insbesondere ist der Fluidkanal K nicht durch ein in dem Gehäuse 19 angeordnetes Rohr oder einen in dem Gehäuse 19 angeordneten Schlauch gebildet.

Vorzugsweise ist/sind das Ventil 9 und/oder einer oder mehrere der Sensoren 10 von einer Außenseite des Gehäuses 19 aus derart mit dem Gehäuse 19 verbindbar oder verbunden, dass ein Ventilkopf 9A des Ventils 9 und/oder der/die Sensor/en 10 zwischen dem Einlass 6 und dem Auslass 7 mit dem Fluidkanal K in Wirkverbindung stehen.

Vorzugsweise ist das Ventil 9 bzw. der Ventilkopf 9A derart in dem Gehäuse 19 anordenbar bzw. mit dem Gehäuse 19 verbindbar oder verbunden, dass der Ventilkopf 9A in den Fluidkanal K hineinragt und/oder der Fluidkanal K mit dem Ventil 9 bzw. Ventilkopf 9A verschließbar ist, sodass kein Wasser das Ventil 9 passieren kann. Das Gehäuse 19 bildet vorzugsweise einen Ventilsitz für den Ventilkopf 9A des Ventils 9.

Unter einer "Wirkverbindung" mit dem Fluidkanal K wird insbesondere eine Anordnung bzw. Verbindung derart verstanden, dass die Sensoren 10 jeweils ihre Funktion erfüllen können. Beispielsweise steht der Temperatursensor 10C dann in Wirkverbindung mit dem Fluidkanal K, wenn der Temperatursensor 10C so angeordnet ist, dass mit dem Temperatursensor 10C die Temperatur des Wassers in dem Fluidkanal K messbar ist. Der Drucksensor 10A und/oder Volumenstromsensor 10B stehen vorzugsweise dann in Wirkverbindung mit dem Fluidkanal K, wenn ein Druck bzw. ein Volumenstrom des Wassers in dem Fluidkanal K mit dem entsprechenden Sensor 10 messbar ist.

Das Gehäuse 19 weist vorzugsweise mindestens ein Sackloch 20 auf. Vorzugsweise weist das Gehäuse 19 mehrere Sacklöcher 20 auf. Insbesondere ist dem Ventil 9 bzw. Ventilkopf 9A und/oder jedem Sensor 10 genau ein Sackloch 20 zugeordnet.

Das Sackloch 20 erstreckt sich vorzugsweise von einer Außenseite des Gehäuses 19 bis zu dem Fluidkanal K.

Der Ventilkopf 9A und/oder der mindestens eine Sensor 10 ist vorzugsweise derart in dem Sackloch 20 anordenbar oder angeordnet, dass das Sackloch 20 fluiddicht verschlossen ist. Insbesondere ist der Ventilkopf 9A und/oder der mindestens eine Sensor 10 derart in dem Sackloch 20 anordenbar oder angeordnet, dass bei einer Hygienespülung das Wasser den Fluidkanal K vom Einlass 6 zum Auslass 7 durchströmt, ohne durch eines der Sacklöcher 20 auszutreten.

Insbesondere können eine oder mehrere Dichtungen zur Abdichtung des Sacklochs 20 bzw. der Sacklöcher 20 gegenüber dem Ventilkopf 9A und/oder dem Sensor 10 vorgesehen sein.

Das Gehäuse 19 bzw. Sackloch 20 weist vorzugsweise ein Gewinde auf. Insbesondere ist das Gewinde dazu ausgebildet, dass der Ventilkopf 9A bzw. der Sensor 10 in das Gehäuse 19 bzw. Sackloch 20 einschraubbar ist. Dementsprechend weist der Ventilkopf 9A bzw. der Sensor 10 vorzugsweise ein zu dem Gewinde des Gehäuses 19 bzw. Sacklochs 20 korrespondierendes Gewinde auf.

Nachfolgend werden einige bevorzugte Ausführungsbeispiele von mit der Spülvorrichtung 3 bzw. Steuerung 12 durchgeführten bzw. durchführbaren Verfahren beschrieben, die unabhängig voneinander, aber auch in beliebiger Kombination realisiert werden können. Das System 1 bzw. die Spülvorrichtung 3 vorzugsweise ist jeweils zur Durchführung der beschriebenen Verfahrensaspekte ausgebildet.

Gemäß einem Aspekt ist die Steuerung 12 bzw. Spülvorrichtung 3 dazu ausgebildet, Insbesondere auf Basis von mit dem Drucksensor 10A gemessenen Daten, Druckschwankungen in dem Trinkwassersystem 4 bzw. dem Fluidweg F zu erkennen. So können mittels des Drucksensors 10A Unregelmäßigkeiten, insbesondere Rohrbrüche o. dgl., erkannt werden. Hierdurch ist die Spülvorrichtung 3 insbesondere auch zur Überwachung des Trinkwassersystems 4 ausgebildet. Optional kann die Spülvorrichtung 3 somit zur Überwachung von leerstehenden Häusern, Wohnungen oder Zimmern verwendet werden.

Gemäß einem weiteren Aspekt wird mittels des Volumenstromsensors 10B der Volumenstrom des durch die Spülvorrichtung 3 strömenden Wassers gemessen. Auf Basis hierdurch ermittelter Daten kann beispielsweise mittels der Steuerung 12 gemessen bzw. überprüft werden, welche Wassermenge bzw. welches Volumen in dem Trinkwassersystem 4 bei einer Hygienespülung ausgetauscht wurde bzw. wird.

Mittels der Steuerung 12 kann das Öffnen und Schließen des Ventils 9 gesteuert werden. Beispielsweise ist es möglich, das Ventil 9 zu schließen bzw. die Hygienespülung zu beenden, wenn ein bestimmtes Wasservolumen die Spülvorrichtung 3 durchlaufen hat. Dieses Wasservolumen kann beispielsweise dem Volumen des in dem Trinkwassersystem 4 aufnehmbaren Wassers entsprechen, so dass das Ventil 9 geschlossen wird, wenn bei einer Hygienespülung das Wasser in dem Trinkwassersystem 4 vollständig ausgetauscht wurde und somit die Hygienespülung beendet ist bzw. werden kann.

Gemäß einem weiteren Aspekt erkennt die Spülvorrichtung 3 bzw. Steuerung 12 auf Basis von Daten des Temperatursensors 10C, ob und/oder wann bzw. nach welcher Zeit bzw. Spüldauer eine korrekte Hygienespülung durchgeführt wurde und/oder die Spülung beendet bzw. das Ventil 9 geschlossen werden kann. Insbesondere ist eine konstante bzw. sich nicht (wesentlich) ändernde Temperatur des die Spülvorrichtung 3 durchlaufenden Wassers ein Indiz dafür, dass die Hygienespülung korrekt durchgeführt wurde und/oder dass das Wasser in dem Trinkwassersystem 4 vollständig ausgetauscht wurde.

In dem Trinkwassersystem 4 befindliches Wasser nimmt nach einiger Zeit die Umgebungstemperatur an und kann beispielsweise im Sommer sehr warm und/oder im Winter sehr kalt sein. Insbesondere kann sich die Temperatur von in dem Trinkwassersystem 4 stagnierendem Wasser von der Temperatur des dem Trinkwassersystem 4 zugeführten Wassers unterscheiden. Wenn nun durch den Temperatursensor 10C keine Temperaturveränderung in dem Wasser, das die Spülvorrichtung 3 durchläuft, gemessen wird, stellt dies einen Hinweis darauf dar, dass das in dem Trinkwassersystem 4 stagnierende Wasser vollständig durch frisches Wasser ersetzt wurde und die Hygienespülung beendet werden kann.

Auf diese Weise kann die Spülvorrichtung 3 automatisch ein Volumen und/oder eine Zeit ermitteln, nach dem oder der der Inhalt des Trinkwassersystems 4 vollständig ersetzt ist.

Dieses mittels des Temperaturverlaufs bestimmte Volumen und/oder die mittels des Temperaturverlaufes bestimmte Zeit (Öffnungsdauer des Ventils 9) kann dann zukünftig für die Steuerung des Ventils 9 verwendet werden, auch wenn ein Temperaturverlauf, beispielsweise im Winter, eine genaue Erkennung des vollständigen Austauschs des Wassers in dem Trinkwassersystem 4 nicht erlauben sollte. Die vorschlagsgemäße Spülvorrichtung 3 kann also insofern selbstlernend sein, dass über Bestimmung und Analyse eines Temperaturverlaufs des in einem Spülvorgang durch die Spülvorrichtung 3 strömenden Wassers Soll-Werte für andere Kriterien zur Steuerung ermittelt werden, auf deren Basis das Ventil 9 mittels der Steuerung 12 im Anschluss alternativ oder zusätzlich gesteuert wird.

Gemäß einem weiteren Aspekt wird die Spülvorrichtung 3 von einem Füllstand gesteuert. Bei dem Füllstand handelt es sich insbesondere um den Wasserspiegel L in den der Spülvorrichtung 3 zugeordneten Becken 8. Bevorzugt erkennt die Steuerung 12 auf Basis von Daten des Füllstandssensors 10D einen bestimmten Füllstand bzw. Wasserspiegel L oder das Erreichen bzw. Überschreiten eines solchen bestimmten Füllstands bzw. Wasserspiegels L. Wenn die Steuerung 12 diesen Füllstand bzw. Wasserspiegel L erkannt hat, kann diese das Ventil 9 schließen bzw. derart steuern, dass eine Hygienespülung gestoppt und/oder zukünftige Hygienespülungen unterbunden werden. Auf diese Weise kann verhindert werden, dass bei vollständiger oder teilweiser Blockade eines Ablaufs 8A des Beckens 8 der Wasserspiegel L durch aus dem Auslass 7 abgegebenen Wassers steigt und möglicherweise zu einem Überlaufen des Beckens 8 führt.

Gemäß einem weiteren Aspekt erkennt die Steuerung 12 auf Basis von Daten des Füllstandssensors 10D das Unterschreiten eines bestimmten Füllstands bzw. Wasserspiegels L bzw. ein Absinken des Wasserspiegels L. Wenn die Steuerung 12 ein solches Absinken bzw. Unterschreiten erkannt hat, kann diese das Ventil 9 wieder öffnen bzw. derart steuern, dass eine Hygienespülung fortgesetzt wird und/oder zukünftige Hygienespülungen durchgeführt werden können. Auf diese Weise kann die Spülvorrichtung 3 automatisch wieder in Betrieb genommen werden bzw. können die Hygienespülungen automatisch fortgesetzt werden, wenn eine Blockade eines Ablaufs 8A eines Beckens 8 wieder aufgehoben wird bzw. wurde.

Gemäß einem weiteren Aspekt werden die Daten von verschiedenen Hygienespülungen aufgezeichnet und vorzugsweise miteinander verglichen, insbesondere mittels der Steuerung 12. Auf Basis der gemessenen Daten bzw. auf Basis des Vergleichs zwischen gemessenen Daten verschiedener Spülvorgänge können (automatisch) Einstellungen zur Durchführung von zukünftigen Hygienespülungen vorgenommen und/oder verändert werden.

Beispielsweise kann festgestellt werden, dass bei mehreren Hygienespülungen jeweils nach der gleichen Zeit eine konstante und/oder die gleiche Temperatur in dem die Spülvorrichtung 3 durchlaufenden Wasser gemessen wird. Da dies - wie oben erläutert - darauf hindeutet, dass das Wasser in dem Trinkwassersystem 4 komplett ausgetauscht wurde und somit die Hygienespülung beendet werden kann, kann die Steuerung 12 Einstellungen zur Durchführung der Hygienespülung derart festlegen oder ändern, dass das Ventil 9 automatisch nach dieser oder einer hieran orientierten Zeit geschlossen wird, und zwar bevorzugt auch dann, wenn die Wassertemperatur dauerhaft konstant ist oder sich sonstwie atypisch ändert. Auf diese Weise kann beispielsweise Wasser bei der Durchführung von Hygienespülungen gespart werden und/oder können die Einstellungen zur Hygienespülung optimal auf das jeweilige Trinkwassersystem 4 angepasst werden. Dies ist insbesondere vorteilhaft für den Einsatz der Spülvorrichtung 3 bei verschiedenen Trinkwassersystemen 4, beispielsweise in verschiedenen Häusern.

Die Energieversorgungseinrichtung 13 stellt vorzugsweise die zum Betrieb der Spülvorrichtung 3 bzw. zum Durchführen von Hygienespülungen benötigte (elektrische) Energie bereit. Vorzugsweise weist die Energieversorgungseinrichtung 13 einen Energiespeicher 13A, insbesondere einen Akku oder eine Batterie, auf. Die Spülvorrichtung 3 ist mittels des Energiespeichers 13A mobil und/oder energieautark ausgebildet und/oder kann mittels der Energieversorgungseinrichtung 13 unabhängig von einem Anschluss an ein Stromnetz betrieben werden.

Optional kann die Energieversorgungseinrichtung 13 einen Versorgungsanschluss 13B aufweisen und/oder an diesen angebunden sein. Der Versorgungsanschluss 13B ist vorzugsweise zum Laden des Energiespeichers 13A ausgebildet. Vorzugsweise ist der Spülvorrichtung 3 über den Versorgungsanschluss 13B elektrische Energie zuführbar. Insbesondere ist der Versorgungsanschluss 13B durch ein Netzteil und/oder ein Ladegerät für den Energiespeicher 13A gebildet. Die Spülvorrichtung 3 kann alternativ oder zusätzlich zum Betrieb bzw. zur Versorgung durch den Energiespeicher 13A durch den Versorgungsanschluss 13B betrieben bzw. mit elektrischer Energie versorgt werden.

Die Energieversorgungseinrichtung 13 dienst vorzugsweise der Regelenergieversorgung der Spülvorrichtung 3. Insbesondere ist die Energieversorgungseinrichtung 13 also dazu ausgebildet, beim normalen Betrieb die Spülvorrichtung 3 mit Energie zu versorgen.

Die Spülvorrichtung 3 weist vorzugsweise, insbesondere zusätzlich zu der Energieversorgungseinrichtung 13, eine Notenergieversorgungseinrichtung 18 auf.

Die Notenergieversorgungseinrichtung 18 ist vorzugsweise dazu ausgebildet, das Ventil 9 bei einem Ausfall der Energieversorgungseinrichtung 13 bzw. Regelenergieversorgung zu schließen.

Die Notenergieversorgungseinrichtung 18 weist vorzugsweise einen elektrischen Energiespeicher 18A, insbesondere eine Batterie, einen Akku und/oder einen Kondensator, auf oder ist hierdurch gebildet. Die Energieversorgungseinrichtung 13 ist vorzugsweise dazu ausgebildet, den Energiespeicher 18A der Notenergieversorgungseinrichtung 18 aufzuladen.

Der Energiespeicher 18A der Notenergieversorgungseinrichtung 18 ist vorzugsweise getrennt von der Energieversorgungseinrichtung 13 mit dem Ventil 9 verbunden bzw. verbindbar. Hierdurch ist insbesondere ein Schließen des Ventils 9 ermöglicht, auch wenn die Regelenergieversorgung bzw. Energieversorgungseinrichtung 13 ausfällt.

Die Steuerung 12 ist vorzugsweise dazu ausgebildet, das Schließen des Ventils 9 mittels der Notenergieversorgungseinrichtung 18 automatisch zu bewirken, wenn bei geöffnetem Ventil 9 die Energieversorgungseinrichtung 13 bzw. Regelenergieversorgung ausfällt.

Vorzugsweise ist die Spülvorrichtung 3 dazu ausgebildet, bei einem Ausfall der Energieversorgungseinrichtung 13 bzw. Regelenergieversorgung eine Mitteilung, insbesondere Warnung, zu generieren, auszugeben und/oder zu übermitteln.

Die Datenschnittstelle 14 ist vorzugsweise zum Austausch, insbesondere zum Senden und/oder Empfangen, von Daten, insbesondere der Sensoren 10, ausgebildet.

Das System 1 weist vorzugsweise eine Bedienvorrichtung 16 auf. Die Bedienvorrichtung 16 ist vorzugsweise körperlich von der Spülvorrichtung 3 getrennt und/oder mit der Spülvorrichtung 3 bzw. der Datenschnittstelle 14 zum Datenaustausch koppelbar. Insbesondere ist die Bedienvorrichtung 16 durch ein Smartphone, ein Tablet, einen Laptop o. dgl. gebildet.

Die Spülvorrichtung 3 ist vorzugsweise zur Kommunikation mit der Bedienvorrichtung 16, insbesondere über die Datenschnittstelle 14, ausgebildet. Vorzugsweise sind die Bedienvorrichtung 16 und die Datenschnittstelle 14 zur Kommunikation via Bluetooth, Infrarot, WLAN und/oder das Mobilfunknetz ausgebildet.

Es ist auch möglich, dass Daten nicht direkt zwischen der Datenschnittstelle 14 und der Bedienvorrichtung 16 ausgetauscht werden, sondern mittelbar über einen Server 21, eine Datenbank o. dgl.

Vorzugsweise wird die Spülvorrichtung 3 über eine App der Bedienvorrichtung 16 gesteuert, konfiguriert und/oder bedient.

Die Spülvorrichtung 3 kann dazu ausgebildet sein, die von den Sensoren 10 gemessene Daten und/oder auf den Daten basierende Informationen und/oder Warnungen zu übermitteln, insbesondere an einen Server 21, eine Datenbank und/oder die Bedienvorrichtung 16.

Vorzugsweise werden nach jeder Hygienespülung die mit den Sensoren 10 gemessenen Daten an die Bedienvorrichtung 16 übermittelt. Dies dient vorzugsweise einer Protokollierung der Hygienespülungen.

Vorzugsweise erkennt die Steuerung 12 Abweichungen, Unregelmäßigkeiten und/oder Besonderheiten in den Daten, beispielsweise wenn ein Rohrbruch stattgefunden hat oder eine Hygienespülung nicht korrekt durchgeführt werden konnte, und/oder sendet die Steuerung 12 bzw. Spülvorrichtung 3 entsprechende Informationen und/oder Warnungen an die Bedienvorrichtung 16.

Alternativ oder zusätzlich werden Warnungen und/oder Informationen über Abweichungen zwischen den Daten verschiedener Hygienespülungen übermittelt.

Vorzugsweise können durch die Bedienvorrichtung 16 bzw. eine App der Bedienvorrichtung 16 Einstellungen der Spülvorrichtung 3 vorgenommen oder geändert werden, beispielsweise Intervalle zur Durchführung von Hygienespülungen, eine Dauer einer Hygienespülung oder dergleichen.

Die Spülvorrichtung 3 weist vorzugsweise eine Anzeigeeinrichtung 17, insbesondere einen elektronischen Bildschirm, auf. Die Anzeigeeinrichtung 17 kann auch als berührungsempfindliches Display bzw. Touch-Screen ausgebildet sein und/oder zur Bedienung der Spülvorrichtung 3 ausgebildet sein. Alternativ oder zusätzlich weist die Spülvorrichtung 3 ein oder mehrere Bedienelemente, insbesondere Schalter oder Taster, zur Konfiguration auf. Vorzugsweise sind mittels der Anzeigeeinrichtung 17 von den Sensoren 10 gemessene Daten und/oder Einstellungen der Spülvorrichtung 3 anzeigbar.

Vorzugsweise ist die Spülvorrichtung 3 dazu ausgebildet, weitere Informationen, wie beispielsweise einen Ladezustand des Energiespeichers 13 oder einen sonstigen Gerätestatus, mittels der Anzeigeeinrichtung 17 anzuzeigen und/oder mittels der Datenschnittstelle 14 an die Bedienvorrichtung 16 zu übermitteln.

Die Spülvorrichtung 3 ist dazu ausgebildet, mit dem Temperatursensor 10C Temperaturverläufe von separaten, mit der Spülvorrichtung 3 durchgeführten Hygienespülungen zu ermitteln. Insbesondere ist die Spülvorrichtung 3 dazu ausgebildet, zu verschiedenen Zeitpunkten während einer Hygienespülung mit dem Temperatursensor 10C die Temperatur des Wassers in der Spülvorrichtung 3 zu messen.

Die Spülvorrichtung 3 ist dazu ausgebildet, Abweichungen zwischen den verschiedenen Temperaturverläufen zu ermitteln. Die Spülvorrichtung 3 ist dazu ausgebildet, einen Temperaturverlauf mit mehreren anderen Temperaturverläufen zu vergleichen bzw. Abweichungen von einem Temperaturverlauf zu mehreren anderen Temperaturverläufen zu ermitteln.

Hierzu werden die mit dem Temperatursensor 10C gemessenen Temperaturen vorzugsweise gespeichert, insbesondere gemeinsam mit den zu den jeweiligen Temperaturen korrespondierenden Zeitpunkten, zu denen die Temperatur gemessen wurde. Der Zeitpunkt einer Temperaturmessung wird mit dem Zeitmesser 15 bestimmt.

Das Ermitteln einer Abweichung zwischen Temperaturverläufen erfolgt durch Vergleich der Temperaturverläufe. Vorzugsweise werden hierbei die Temperaturen nach verschiedenen Spüldauern bei einer Hygienespülung verglichen. Beispielsweise können bei jeder Hygienespülung nach den gleichen Abständen, beispielsweise alle fünf oder zehn Sekunden, die Temperatur gemessen werden und zur Ermittlung von Abweichungen zwischen den Temperaturverläufen die nach gleichen Spüldauern gemessenen Temperaturen verschiedener Hygienespülungen miteinander verglichen werden.

Die Spülvorrichtung 3 ist vorzugsweise dazu ausgebildet, eine Mitteilung, insbesondere Warnung, zu generieren, auszugeben und/oder zu übermitteln, wenn eine Abweichung zwischen Temperaturverläufen mindestens ein Prüfkriterium erfüllt.

Die Mitteilung bzw. Warnung weist vorzugsweise ein akustisches und/oder optisches Signal auf bzw. ist hierdurch gebildet. Insbesondere ist die Spülvorrichtung 3 also dazu ausgebildet, ein akustisches und/oder optisches Signal bzw. Warnsignal auszugeben, wenn eine Abweichung zwischen Temperaturverläufen mindestens ein Prüfkriterium erfüllt.

Das akustische Signal kann beispielsweise ein Piepen, ein sich wiederholendes Signal, eine Melodie, eine Sprachausgabe oder dergleichen sein oder aufweisen.

Das optische Signal kann beispielsweise ein dauerhaft leuchtendes oder blinkendes Licht und/oder die Anzeige eines Textes oder dergleichen sein oder aufweisen. Vorzugsweise ist die Spülvorrichtung zur Ausgabe des (optischen) Signals mit der Anzeigeeinrichtung 17 ausgebildet.

Alternativ oder zusätzlich ist die Mitteilung bzw. Warnung an ein externes Gerät, insbesondere einen Server 21, ein mobiles Endgerät wie ein Handy bzw. Smartphone, einen Laptop oder ein Tablet, übermittelbar bzw. ist die Spülvorrichtung 3 dazu ausgebildet, die Mitteilung bzw. Warnung an ein solches externes Gerät zu übermitteln.

Besonders bevorzugt ist das externe Gerät die voranstehend beschriebene Bedienvorrichtung 16. Die Übermittlung an den Server 21 und/oder das externe Gerät erfolgt vorzugsweise drahtlos.

Als Prüfkriterium für eine Abweichung zwischen Temperaturverläufen kann beispielsweise das Erreichen oder Überschreiten einer vorgegebenen bzw. vorgebbaren Temperatur am Ende der Hygienespülung und/oder zu einem bestimmten Zeitpunkt während der Hygienespülung vorgesehen sein.

Alternativ oder zusätzlich kann als Prüfkriterium eine maximale Temperaturdifferenz zwischen zwei Temperaturverläufen zu einem bestimmten Zeitpunkt vorgesehen bzw. einer bestimmten Spüldauer sein.

Gemäß einem weiteren Beispiel kann als Prüfkriterium ein Schwellwert für eine Temperaturänderungsrate (Temperaturänderung pro Zeit) vorgegeben oder vorgebbar sein. Insbesondere kann die Abweichung darin bestehen, dass nach einer kürzeren Zeit als bei einem oder mehreren vorherigen Temperaturverläufen eine konstante Temperatur bzw. eine geringe Temperaturänderung bzw. Temperaturänderungsrate erreicht wird. Entsprechend ist das Prüfkriterium insbesondere dann erfüllt, wenn bei einem Temperaturverlauf bzw. einer Hygienespülung nach einer kürzeren Zeit als bei einem oder mehreren vorherigen Temperaturverläufen bzw. Hygienespülungen der Schwellwert erreicht oder unterschritten wird.

Insbesondere können die genannten Prüfkriterien auch kombiniert werden und/oder weitere Prüfkriterien vorgesehen sein, beispielsweise ein Prüfkriterium, gemäß dem geprüft wird, wie schnell sich bei einem Temperaturverlauf die Temperatur ändert, um hierdurch unerwartete Ereignisse bzw. Verläufe und/oder sonstige Anomalien bzw. Temperaturanomalien zu erkennen.

Durch das Ermitteln von Abweichungen zwischen Temperaturverläufen können beispielsweise Hygienespülungen optimiert werden, indem die Dauer der Hygienespülung auf Basis der ermittelten Abweichung angepasst bzw. verändert wird.

Des Weiteren kann eine Abweichung zwischen Temperaturverläufen ein Hinweis auf eine Veränderung in dem Trinkwassersystem 4 bzw. in der Umgebung des Trinkwassersystems 4 sein. Beispielsweise kann eine Abweichung zwischen den Temperaturverläufen ein Hinweis darauf sein, dass das Trinkwassersystem 4 ein Leck aufweist, durch welches Wasser austritt. In diesem Fall wird eine konstante Temperatur bei einer Hygienespülung üblicherweise nach kürzerer Zeit erreicht als bei einer früheren Hygienespülung, bei der das Trinkwassersystem 4 noch kein Leck aufwies, denn durch das Leck wird die Menge des bei Nichtbenutzung in dem Trinkwassersystem 4 stehenden Wassers verringert. Typischerweise hat das dem Trinkwassersystem 4 zugeführte Wasser nämlich eine andere Temperatur als das in dem Trinkwassersystem 4 bei Nichtbenutzung stehende Wasser.

Eine Abweichung zwischen Temperaturverläufen kann aber auch ein Hinweis auf einen Ausfall einer Heizeinrichtung sein. Wenn die Spülvorrichtung 3 über die Auslaufarmatur 2 an eine Warmwasserleitung angeschlossen ist, kann das Nicht-Erreichen einer bei einer oder mehreren vorherigen Hygienespülungen bzw. Temperaturverläufen erreichte Temperatur ein Hinweis darauf sein, dass eine Heizeinrichtung zum Erhitzen von Wasser in dem Trinkwassersystem 4 bzw. zur Bereitstellung von Warmwasser ausgefallen ist oder nicht ordnungsgemäß funktioniert. Eine veränderte Temperatur zu Beginn eines Temperaturverlaufs bzw. einer Hygienespülung kann ein Hinweis auf den Ausfall oder eine nicht ordnungsgemäße Funktion einer Heizung in einem Gebäude mit dem Trinkwassersystem 4 sein. Beispielsweise kann nämlich vorgesehen sein, dass ein Gebäude mit dem Trinkwassersystem 4 mittels einer - insbesondere von dem Trinkwassersystem 4 separaten - Heizung auf einer Mindesttemperatur gehalten wird, etwa um ein Zufrieren von Leitungen bzw. des Trinkwassersystems 4 zu verhindern. Falls die Heizung ausgefallen ist, ist es möglich, dass die Temperatur des Wassers in dem Trinkwassersystem 4 und damit zu Beginn einer Hygienespülung bzw. eines Temperaturverlaufs unter die Temperatur bei einer vorherigen Hygienespülung bzw. einem vorherigen Temperaturverlauf sinkt. Dies kann eine Abweichung zwischen Temperaturverläufen darstellen. Insbesondere ist die Spülvorrichtung 3 dazu ausgebildet, in diesem Fall eine Mitteilung bzw. Warnung zu generieren, auszugeben und/oder zu übermitteln.

Die Spülvorrichtung 3 ist vorzugsweise dazu ausgebildet, auf Basis der Abweichung zwischen Temperaturverläufen eine Leckage und/oder einen Schaden in dem Trinkwassersystem, insbesondere einen Rohrbruch, oder eine Gefahr einer Leckage und/oder eines Schadens - beispielsweise durch Gefrieren des Trinkwassersystems 4 bzw. Leitungen davon - zu erkennen. Insbesondere ist die Spülvorrichtung 3 dazu ausgebildet, bei einer solchen Erkennung eine Mitteilung bzw. Warnung zu generieren, auszugeben und/oder zu übermitteln.

Alternativ oder zusätzlich ist die Spülvorrichtung 3 dazu ausgebildet, auf Basis der Abweichungen zwischen Temperaturverläufen einen Ausfall einer Heizeinrichtung zu erkennen. Hierbei kann die Heizeinrichtung eine Heizeinrichtung des Trinkwassersystems 4 sein, die dazu ausgebildet ist, das Wasser in dem Trinkwassersystem zu erhitzen, beispielsweise ein Boiler. Es ist jedoch auch möglich, dass die Heizeinrichtung eine von dem Trinkwassersystem 4 getrennte Heizeinrichtung ist, beispielsweise eine Heizung für das Gebäude, in dem sich das Trinkwassersystem 4 befindet. Insbesondere ist die Spülvorrichtung 3 dazu ausgebildet, bei einem Ausfall einer Heizeinrichtung eine Mitteilung bzw. Warnung zu generieren, auszugeben und/oder zu übermitteln.

Gemäß einem weiteren Aspekt betrifft die vorliegende Offenbarung daher die Verwendung der Spülvorrichtung 3 zur Überwachung der Funktion mindestens einer Heizeinrichtung.

Gemäß einem weiteren Aspekt betrifft die vorliegende Offenbarung auch die Verwendung der Spülvorrichtung 3 zur Ermittlung eines Lecks und/oder Schadens in dem Trinkwassersystem 4.

Gemäß einem weiteren Aspekt betrifft die vorliegende Offenbarung auch die Verwendung der Spülvorrichtung 3 zur Ermittlung einer Rohrbruchgefahr, insbesondere in dem Trinkwassersystem 4.

Die Spülvorrichtung 3 ist vorzugsweise dazu ausgebildet, auf Basis eines Temperaturverlaufs und eines mit dem Drucksensor 10A gemessenen Druck oder Druckverlaufs eine Druckanomalie, eine Leckage und/oder einen Schaden, insbesondere Rohrbruch, in dem Trinkwassersystem 4 zu erkennen. Beispielsweise kann ein plötzlicher Druckabfall oder ein niedrigerer Druck als bei einer oder mehreren vorhergehenden Hygienespülungen ein Hinweis auf eine Leckage und/oder einen Schaden, insbesondere Rohrbruch, in dem Trinkwassersystem 4 sein. Zur Erkennung eines Lecks und/oder Schadens hat es sich als besonders zuverlässig und damit vorteilhaft erwiesen, einerseits einen - insbesondere mit dem Temperatursensor 10C gemessenen - Temperaturverlauf bzw. eine Abweichung eines Temperaturverlaufs einer Hygienespülung von vorherigen Temperaturverläufen und andererseits einen mit dem Drucksensor 10A gemessenen Druck bzw. Druckverlauf zu verwenden. In synergistischer Weise können hierdurch Fehleinschätzungen, die lediglich auf einem Temperaturverlauf oder einem Druck bzw. Druckverlauf basieren, vermieden werden. Es hat sich nämlich gezeigt, dass bei einer Leckage bzw. einem Schaden üblicherweise Abweichungen im Temperaturverlauf und Abweichungen im Druck bzw. Druckverlauf miteinander einhergehen.

Insbesondere ist die Spülvorrichtung 3 dazu ausgebildet, bei Erkennung einer Leckage und/oder eines Schadens eine Mitteilung bzw. Warnung zu generieren, auszugeben und/oder zu übermitteln.

Wie voranstehend beschrieben, kann die Spülvorrichtung 3 - insbesondere zusätzlich zu dem Temperatursensor 10C zur Messung der Temperatur des Wassers in der Spülvorrichtung 3 bzw. dem Fluidkanal K - einen Umgebungstemperatursensor 10E aufweisen. Die Spülvorrichtung 3 ist dann vorzugsweise dazu ausgebildet, eine Temperaturdifferenz zwischen den Messwerten des Temperatursensors 10C und des Umgebungstemperatursensors 10E zu bestimmen und/oder auszuwerten und insbesondere mit einem Prüfkriterium zu bewerten. Als Prüfkriterium kann beispielsweise ein Schwellwert für die Temperaturdifferenz vorgesehen sein, wobei das Prüfkriterium als erfüllt gilt, wenn die Temperaturdifferenz bzw. ein Maximum der Temperaturdifferenz während einer Hygienespülung den Schwellwert erreicht oder überschreitet. Insbesondere kann das Erreichen oder Überschreiten ein Indikator dafür sein, dass eine Heizeinrichtung ordnungsgemäß funktioniert, da ansonsten - insbesondere im Winter bzw. bei niedrigen Umgebungstemperaturen - die Temperatur des Wassers in dem Trinkwassersystem 4 identisch oder sehr ähnlich zu der Umgebungstemperatur wäre. Insbesondere ist die Spülvorrichtung 3 dazu ausgebildet, bei Nicht-Erfüllen des Prüfkriteriums eine Mitteilung bzw. Warnung zu generieren, auszugeben und/oder zu übermitteln.

Gemäß einem weiteren Aspekt betrifft die vorliegende Offenbarung auch die Verwendung der Spülvorrichtung 3 zur Messung einer Umgebungstemperatur. Zur Messung der Umgebungstemperatur kann insbesondere der Umgebungstemperatursensor 10E verwendet werden. Es ist jedoch auch möglich, den Temperatursensor 10C zur Messung der Umgebungstemperatur zu verwenden. Die Temperatur in der Spülvorrichtung 3 bzw. dem Trinkwassersystem 4 nähert sich nämlich nach einer Hygienespülung bzw. bei Nichtbenutzung des Trinkwassersystems 4 der Umgebungstemperatur an. Auf diese Weise ist mit hinreichendem zeitlichen Abstand zu einer vorherigen Hygienespülung auch der Temperatursensor 10C zur Messung der Umgebungstemperatur verwendbar.

Gemäß einem weiteren Aspekt betrifft die vorliegende Erfindung auch ein System 1 mit der Auslaufarmatur 2, der Spülvorrichtung 3 und einem Server 21. Der Server 21 ist körperlich von der Spülvorrichtung 3 getrennt ausgebildet. Das System 1 ist dazu ausgebildet, Messwerte der Sensoren 10 oder die Mitteilung, insbesondere Warnung, an den Server 21 zu übermitteln, insbesondere automatisch und/oder drahtlos.

Der Server 21 ist dazu ausgebildet, die Messwerte bzw. Mitteilung - insbesondere drahtlos - an ein mobiles Endgerät zu übermitteln, insbesondere in einer E-Mail, SMS, Nachricht eines Instant-Messaging-Dienstes, einer Push-Mitteilung oder dergleichen.

Gemäß einem bevorzugten Aspekt ist der Server 21 alternativ oder zusätzlich dazu ausgebildet, die Spülvorrichtung 3 zu konfigurieren, zu steuern und/oder zu programmieren. Insbesondere sind mit dem Server 21 also Einstellungen der Spülvorrichtung 3 mit dem Server 21 bzw. über den 21 vorgebbar und/oder änderbar. Mit dem Server 21 sind vorzugsweise Programme, Einstellungen, Befehle und/oder Anweisungen auf die Spülvorrichtung 3 übertragbar, durch die die mit der Spülvorrichtung 3 durchgeführten Hygienespülungen gesteuert, beeinflusst und/oder durchgeführt werden.

Die Spülvorrichtung 3 ist also vorzugsweise durch den Server 21 steuerbar, konfigurierbar und/oder programmierbar.

Eine Programmierung der Spülvorrichtung 3 durch den Server 21 kann beispielsweise darin bestehen, dass (temporäre) Spülprogramme bzw. Spülpläne, Abläufe, Zeiten, o. dgl. von Hygienespülungen von dem Server 21 an die Spülvorrichtung 3 übermittelt werden.

Alternativ oder zusätzlich kann der Server 21 dazu ausgebildet ist, ein Firmware-Update der Spülvorrichtung 3 durchzuführen bzw. auf die Spülvorrichtung 3 aufzuspielen. Insbesondere wird hierbei ein Basisprogramm auf einem nicht-flüchtigem Speicher der Spülvorrichtung 3 abgelegt und ab dem Zeitpunkt des entsprechenden Updates bzw. der Übermittlung von dem Server 21 zur Steuerung der Spülvorrichtung 3, insbesondere zur Steuerung des Öffnens und/oder Schließens des Ventils 9, verwendet.

Ein Spülplan und/oder Einstellungen, die insbesondere in Abhängigkeit von mit einem oder mehreren der Sensoren 10 gemessenen Werten bzw. Daten anpassbar sein können, können vorzugsweise in einem temporären bzw. flüchtigen Speicher abgelegt bzw. vom Server 21 dahin übermittelt werden. Alternativ oder zusätzlich ist es jedoch auch möglich, einen Spülplan und/oder Einstellungen als Firmware oder als Teil einer Firmware in einem dauerhaften bzw. nicht-flüchtigen Speicher der Spülvorrichtung 3 abzulegen bzw. dahin zu übermitteln.

Der Server 21 ist vorzugsweise dazu ausgebildet, die Spüleinrichtung aktiv bzw. direkt zu steuern bzw. zu programmieren.

Die vorliegende Erfindung betrifft auch die Verfahren, zu deren Durchführung die Spülvorrichtung 3 bzw. das System 1 - wie voranstehend beschrieben - ausgebildet ist.

Die vorliegende Erfindung betrifft daher ein Verfahren, bei dem Temperaturverläufe von Hygienespülungen ermittelt werden und Abweichungen zwischen den Temperaturverläufen ermittelt werden. Insbesondere betrifft die vorliegende Offenbarung auch Verfahren, bei denen eine Mitteilung, insbesondere Warnung, generiert, ausgegeben und/oder übermittelt wird, wenn - insbesondere wie voranstehend beschrieben - eine Abweichung zwischen Temperaturverläufen ein Prüfkriterium erfüllt. Weiter betrifft die vorliegende Offenbarung vorzugsweise ein Verfahren, bei dem Daten von der Spülvorrichtung 3 an den Server 21 übermittelt werden und der Server die Daten, beispielsweise Messwerte wie insbesondere Temperaturverläufe einer Hygienespülung und/oder eine Mitteilung bzw. Warnung, an ein mobiles Endgerät übermittelt.

### Bezugszeichenliste:

- 1: System
- 2: Auslaufarmatur
- 2A: Auslauf
- 2B: Strahlregler
- 2C: Ventil
- 2D: Bedieneinrichtung
- 3: Spülvorrichtung
- 4: Trinkwassersystem
- 4A: Leitung
- 5: Adapter
- 5A: Nippel
- 5B: Kupplungsteil
- 6: Einlass
- 7: Auslass
- 8: Becken
- 8A: Abfluss
- 9: Ventil
- 9A: Ventilkopf
- 10: Sensor
- 10A: Drucksensor
- 10B: Volumenstromsensor
- 10C: Temperatursensor
- 10D: Füllstandssensor
- 10E: Umgebungstemperatursensor
- 11: Elektronikeinheit
- 12: Steuerung
- 13: Energieversorgungseinrichtung
- 13A: Energiespeicher
- 13B: Versorgungsanschluss
- 14: Datenschnittstelle
- 15: Zeitmesser
- 16: Bedienvorrichtung
- 17: Anzeigeeinrichtung
- 18: Notenergieversorgungseinrichtung
- 18A: Energiespeicher
- 19: Gehäuse
- 20: Sackloch
- 21: Server

- F: Fluidweg
- K: Fluidkanal
- L: Wasserspiegel

## Patentansprüche

1. Spülvorrichtung (3) zur automatischen Durchführung von Hygienespülungen in einem Trinkwassersystem (4),
wobei die Spülvorrichtung (3) einen Temperatursensor (10C) zur Messung der Temperatur von Wasser, das die Spülvorrichtung (3) bei einer Hygienespülung durchläuft, aufweist,
wobei die Spülvorrichtung (3) dazu ausgebildet ist, mit dem Temperatursensor (10C) Temperaturverläufe von separaten, mit der Spülvorrichtung (3) durchgeführten Hygienespülungen zu ermitteln,
wobei die Spülvorrichtung (3) einen Zeitmesser (15) und eine mit dem Temperatursensor (10C) verbundene Steuerung (12) aufweist, durch die das Durchführen von Hygienespülungen mit der Spülvorrichtung (3) gesteuert wird, und
wobei die Steuerung (12) dazu ausgebildet ist, mittels des Temperatursensors (10C) und des Zeitmessers (15) die Temperatur als Funktion der Zeit zu messen und aufzuzeichnen,
**dadurch gekennzeichnet,**
**dass** die Spülvorrichtung (3) dazu ausgebildet ist, einen Temperaturverlauf mit mehreren anderen Temperaturverläufen zu vergleichen, durch Vergleich der Temperaturverläufe Abweichungen zwischen den Temperaturverläufen zu ermitteln und die Durchführung zukünftiger Hygienespülungen zu ändern, wenn eine Abweichung zwischen Temperaturverläufen mindestens ein Prüfkriterium erfüllt.

2. Spülvorrichtung nach Anspruch 1, **dadurch gekennzeichnet, dass** die Spülvorrichtung (3) ferner einen Umgebungstemperatursensor (10E) zur Messung der Umgebungstemperatur aufweist und dazu ausgebildet ist, auf Basis eines Vergleichs von Messwerten des Temperatursensors (10C) mit Messwerten des Umgebungstemperatursensors (10E) eine Anomalie zu erkennen, insbesondere einen Ausfall einer Heizeinrichtung oder eine Rohrbruchgefahr zu detektieren.

3. Spülvorrichtung nach Anspruch 1 oder 2, **dadurch gekennzeichnet, dass** die Spülvorrichtung (3) dazu ausgebildet ist, eine Mitteilung, insbesondere Warnung, zu generieren, auszugeben und/oder zu übermitteln.

4. Spülvorrichtung nach Anspruch 3, **dadurch gekennzeichnet, dass** die Abweichung darin besteht, dass nach einer kürzeren Zeit als bei einem oder mehreren vorherigen Temperaturverläufen ein vorgegebener oder vorgebbarer Schwellwert für eine Temperaturänderungsrate erreicht oder unterschritten wird, insbesondere eine konstante Temperatur erreicht wird.

5. Spülvorrichtung nach Anspruch 3 oder 4, **dadurch gekennzeichnet, dass** die Mitteilung, insbesondere Warnung, ein akustisches und/oder optisches Signal aufweist und/oder an ein externes Gerät, insbesondere einen Server (21), ein mobiles Endgerät und/oder eine Bedienvorrichtung (16), übermittelbar ist.

6. Spülvorrichtung nach einem der voranstehenden Ansprüche, **dadurch gekennzeichnet, dass** die Spülvorrichtung (3) dazu ausgebildet ist, anhand von Abweichungen zwischen Temperaturverläufen eine Leckage und/oder einen Schaden, insbesondere Rohrbruch, in dem Trinkwassersystem (4) und/oder einen Ausfall einer Heizeinrichtung, insbesondere des Trinkwassersystems (4), zu erkennen; und/oder dass die Spülvorrichtung (3) einen Drucksensor (10A) aufweist, wobei die Spülvorrichtung (3) dazu ausgebildet ist, auf Basis eines Temperaturverlaufs und eines mit dem Drucksensor (10A) gemessenen Drucks oder Druckverlaufs eine Druckanomalie, eine Leckage und/oder einen Schaden, insbesondere Rohrbruch, in dem Trinkwassersystem (4) zu erkennen, vorzugsweise wobei die Spülvorrichtung (3) weiter dazu ausgebildet ist, bei einer solchen Erkennung eine Mitteilung, insbesondere Warnung, zu generieren, auszugeben und/oder zu übermitteln; und/oder dass die Spülvorrichtung (3) dazu ausgebildet ist, eine Temperaturdifferenz der Messwerte des Temperatursensors (10C) und des Umgebungstemperatursensors (10E) während einer Hygienespülung zu bestimmen und die Temperaturdifferenz, insbesondere ein Temperaturdifferenz-Maximum, mit einem Prüfkriterium zu bewerten, vorzugsweise wobei die Spülvorrichtung (3) weiter dazu ausgebildet ist, in Abhängigkeit von der Temperaturdifferenz eine Mitteilung, insbesondere Warnung, zu generieren, auszugeben und/oder zu übermitteln.

7. Spülvorrichtung nach einem der voranstehenden Ansprüche, **dadurch gekennzeichnet, dass** die Spülvorrichtung (3) ein elektrisch steuerbares, bistabiles Ventil (9) aufweist und dazu ausgebildet ist, dass bei Öffnung des Ventils (9) Wasser aus der Spülvorrichtung (3) austritt und bei Schließen des Ventils (9) der Austritt von Wasser aus der Spülvorrichtung (3) unterbunden wird,
wobei die Spülvorrichtung (3) eine Energieversorgungseinrichtung (13) für eine Regelenergieversorgung und eine von der Energieversorgungseinrichtung (13) getrennte Notenergieversorgungseinrichtung (18) aufweist, mittels der das Ventil (9) bei einem Ausfall der Energieversorgungseinrichtung (13) bzw. Regelenergieversorgung schließbar ist.

8. Spülvorrichtung nach Anspruch 7, **dadurch gekennzeichnet, dass** die Notenergieversorgungseinrichtung (18) einen elektrischen Energiespeicher (18A) aufweist, der durch die Energieversorgungseinrichtung (13) aufladbar und zum Schließen des Ventils (9) getrennt von der Energieversorgungseinrichtung (13) mit dem Ventil (9) verbindbar ist.

9. Spülvorrichtung nach Anspruch 7 oder 8, **dadurch gekennzeichnet, dass** die Steuerung (12) dazu ausgebildet ist, automatisch das Schließen des Ventils (9) mittels der Notenergieversorgungseinrichtung (18) zu bewirken, wenn bei geöffnetem Ventil (9) die Energieversorgungseinrichtung (13) bzw. Regelenergieversorgung ausfällt; und/oder dass die Spülvorrichtung (3) dazu ausgebildet ist, eine Mitteilung, insbesondere Warnung, zu generieren, auszugeben und/oder zu übermitteln, wenn die Energieversorgungseinrichtung (13) bzw. Regelenergieversorgung ausfällt.

10. Spülvorrichtung nach einem der voranstehenden Ansprüche, **dadurch gekennzeichnet, dass** die Spülvorrichtung (3) ein einen Fluidkanal (K) mit einem Einlass (6) und einem Auslass (7) bildendes Gehäuse (19), ein Ventil (9) mit einem Ventilkopf (9A) und einen oder mehrere Sensoren (10), nämlich den Temperatursensor (10C) und insbesondere einen Drucksensor (10A), einen Volumenstromsensor (10B) und/oder einen Füllstandssensor (10D), aufweist,
wobei der Ventilkopf (9A) und/oder mindestens einer der Sensoren (10) von einer Außenseite des Gehäuses (19) aus derart mit dem Gehäuse (19) verbindbar oder verbunden sind, dass der Ventilkopf (9A) und/oder der mindestens eine Sensor (10) zwischen dem Einlass (6) und dem Auslass (7) mit dem Fluidkanal (K) in Wirkverbindung stehen.

11. Spülvorrichtung nach Anspruch 10, **dadurch gekennzeichnet, dass** der Fluidkanal (K) durch ein oder mehrere Löcher, insbesondere Bohrungen, in dem Gehäuse (19) gebildet ist; und/oder dass das Gehäuse (19) mindestens ein Sackloch (20) aufweist, das sich von einer Außenseite des Gehäuses (19) zu dem Fluidkanal (K) erstreckt, wobei der Ventilkopf (9A) und/oder der mindestens eine Sensor (10) derart in dem Sackloch (20) anordenbar oder angeordnet sind, dass das Sackloch (20) fluiddicht verschlossen ist, vorzugsweise wobei das Sackloch (20) ein Gewinde zur Verbindung mit dem Ventil (9) und/oder dem Sensor (10) aufweist und das Ventil (9) und/oder der Sensor (10) in das Sackloch (20) einschraubbar sind.

12. System (1) zur automatischen Durchführung von Hygienespülungen in einem Trinkwassersystem (4),
wobei das System (1) eine Auslaufarmatur (2) und eine bevorzugt mobile Spülvorrichtung (3) aufweist, wobei die Spülvorrichtung (3) nach einem der voranstehenden Ansprüche ausgebildet ist, und
wobei die Spülvorrichtung (3) an einen Auslauf (2A) der Auslaufarmatur (2) fluidisch angeschlossen oder anschließbar ist,
dass das System (1) einen von der Spülvorrichtung (3) körperlich getrennten Server (21) aufweist und dazu ausgebildet ist, Messwerte der Sensoren (10) und/oder eine auf Basis der Messwerte erzeugte Mitteilung, insbesondere Warnung, automatisch an den Server (21) zu übermitteln,
wobei der Server (21) dazu konfiguriert ist, die Messwerte und/oder Mitteilung an ein mobiles Endgerät zu übermitteln, insbesondere in einer E-Mail, SMS, Nachricht eines Instant-Messaging-Dienstes und/oder Push-Mitteilung, und/oder wobei der Server (21) dazu konfiguriert ist, die Spülvorrichtung (3) zu steuern, zu programmieren und/oder zu konfigurieren.

13. Verfahren, wobei mit einer Spülvorrichtung (3) zur automatischen Durchführung von Hygienespülungen in einem Trinkwassersystem (4), die einen Temperatursensor (10C) aufweist, Temperaturverläufe von separaten, mit der Spülvorrichtung (3) durchgeführten Hygienespülungen ermittelt werden,
wobei dass die Spülvorrichtung (3) einen Zeitmesser (15) und eine mit dem Temperatursensor (10C) verbundene Steuerung (12) aufweist, durch die das Durchführen von Hygienespülungen mit der Spülvorrichtung (3) gesteuert wird,
wobei die Steuerung (12) mittels des Temperatursensors (10C) und des Zeitmessers (15) die Temperatur als Funktion der Zeit misst und aufzeichnet,
**dadurch gekennzeichnet, dass** mit der Spülvorrichtung (3) ein Temperaturverlauf mit mehreren anderen Temperaturverläufen verglichen wird, durch Vergleich der Temperaturverläufe Abweichungen zwischen den Temperaturverläufen ermittelt werden und die Durchführung zukünftiger Hygienespülungen geändert wird, wenn eine Abweichung zwischen Temperaturverläufen mindestens ein Prüfkriterium erfüllt.

14. Verwendung einer nach einem der Ansprüche 1 bis 11 ausgebildeten Spülvorrichtung (3), die mobil ist, zur automatischen Durchführung von Hygienespülungen in einem Trinkwassersystem (4) und zum Anschluss an einen Auslauf (2A) einer Auslaufarmatur (2) ausgebildet ist und einen Drucksensor (10A) zur Bestimmung des Drucks in einem zugeordneten Trinkwassersystem (4) aufweist, zur Leckageüberwachung des Trinkwassersystems (4).

15. Verwendung einer nach einem der Ansprüche 1 bis 11 ausgebildeten Spülvorrichtung (3), die mobil ist und zur automatischen Durchführung von Hygienespülungen in einem Trinkwassersystem (4) und zum Anschluss an einen Auslauf (2A) einer Auslaufarmatur (2) ausgebildet ist, zur Ermittlung eines Lecks und/oder Schadens in dem Trinkwassersystem (4), zur Überwachung der Funktion mindestens einer Heizeinrichtung, insbesondere des Trinkwassersystems (4), zur Messung einer Umgebungstemperatur und/oder zur Ermittlung einer Rohrbruchgefahr.

## Claims

1. Flushing device (3) for automatically performing hygienic flushing processes in a drinking water system (4),
wherein the flushing device (3) comprises a temperature sensor (10C) for measuring the temperature of water which passes through the flushing device (3) during a hygienic flushing process,
wherein the flushing device (3) is configured to determine temperature profiles of separate hygienic flushing processes performed by the flushing device (3) using the temperature sensor (10C),
wherein the flushing device (3) comprises a timer (15) and a controller (12) which is connected to the temperature sensor (10C) and by means of which the performance of hygienic flushing processes by the flushing device (3) is controlled, and
wherein the controller (12) is configured to measure and record the temperature as a function of time by means of the temperature sensor (10C) and the timer (15),
**characterized in that**
the flushing device (3) is configured to compare a temperature profile with a plurality of other temperature profiles, to determine deviations between the temperature profiles by comparing the temperature profiles, and to change the performance of future hygienic flushing processes if a deviation between temperature profiles fulfils at least one test criterion.

2. Flushing device according to claim 1, **characterized in that** the flushing device (3) further comprises an ambient temperature sensor (10E) for measuring the ambient temperature and is configured to identify an anomaly on the basis of a comparison of measured values of the temperature sensor (10C) with measured values of the ambient temperature sensor (10E), in particular to detect a failure of a heating device or a risk of a pipe breakage.

3. Flushing device according to claim 1 or 2, **characterized in that** the flushing device (3) is configured to generate, output and/or transmit a message, in particular a warning.

4. Flushing device according to claim 3, **characterized in that** the deviation consists in that a specified or specifiable threshold value for a temperature change rate is reached or underrun, in particular a constant temperature is reached, after a shorter time than in one or more previous temperature profiles.

5. Flushing device according to claim 3 or 4, **characterized in that** the message, in particular a warning, comprises an acoustic and/or optical signal, and/or can be transmitted to an external device, in particular a server (21), a mobile terminal, and/or an operating device (16).

6. Flushing device according to any one of the preceding claims, **characterized in that** the flushing device (3) is configured to identify a leak and/or damage, in particular a pipe burst, in the drinking water system (4), and/or a failure of a heating device, in particular of the drinking water system (4), on the basis of deviations between temperature profiles; and/or **in that** the flushing device (3) comprises a pressure sensor (10A), wherein the flushing device (3) is configured to identify a pressure anomaly, a leak and/or damage, in particular a pipe burst, in the drinking water system (4) on the basis of a temperature profile and a pressure or pressure curve measured by the pressure sensor (10A), preferably wherein the flushing device (3) is further configured to generate, output and/or transmit a message, in particular a warning, in the case of such identification; and/or **in that** the flushing device (3) is configured to determine a temperature difference of the measured values of the temperature sensor (10C) and of the ambient temperature sensor (10E) during a hygienic flushing process, and to assess the temperature difference, in particular a temperature difference maximum, using a test criterion, preferably wherein the flushing device (3) is further configured to generate, output and/or transmit a message, in particular a warning, depending on the temperature difference.

7. Flushing device according to any one of the preceding claims, **characterized in that** the flushing device (3) comprises an electrically controllable, bistable valve (9) and is configured such that water is output from the flushing device (3) when the valve (9) is opened, and the output of water from the flushing device (3) is prevented when the valve (9) is closed,
wherein the flushing device (3) comprises an energy supply device (13) for normal energy supply, and an emergency energy supply device (18) which is separate from the energy supply device (13) and by means of which the valve (9) can be closed in the event of a failure of the energy supply device (13) and/or normal energy supply.

8. Flushing device according to claim 7, **characterized in that** the emergency energy supply device (18) comprises an electrical energy store (18A) which can be charged by the energy supply device (13) and, in order to close the valve (9), can be connected to the valve (9) separately from the energy supply device (13).

9. Flushing device according to claim 7 or 8, **characterized in that** the controller (12) is configured to automatically bring about the closure of the valve (9) by means of the emergency energy supply device (18) if the energy supply device (13) and/or normal energy supply fails when the valve (9) is open; and/or **in that** the flushing device (3) is configured to generate, output and/or transmit a message, in particular a warning, if the energy supply device (13) and/or normal energy supply fails.

10. Flushing device according to any one of the preceding claims, **characterized in that** the flushing device (3) comprises a housing (19) which forms a fluid channel (K) having an inlet (6) and an outlet (7), a valve (9) having a valve head (9A), and one or more sensors (10), specifically the temperature sensor (10C) and in particular a pressure sensor (10A), a volume flow sensor (10B) and/or a level sensor (10D), wherein the valve head (9A) and/or at least one of the sensors (10) can be or are connected to the housing (19), from an outer side of the housing (19), in such a way that the valve head (9A) and/or the at least one sensor (10) are operatively connected to the fluid channel (K), between the inlet (6) and the outlet (7).

11. Flushing device according to claim 10, **characterized in that** the fluid channel (K) is formed by one or more holes, in particular drilled holes, in the housing (19); and/or in that the housing (19) comprises at least one blind hole (20) which extends from an outer side of the housing (19) to the fluid channel (K), wherein the valve head (9A) and/or the at least one sensor (10) can be or are arranged in the blind hole (20) in such a way that the blind hole (20) is closed in a fluid-tight manner, preferably wherein the blind hole (20) comprises a thread for connection to the valve (9) and/or the sensor (10), and the valve (9) and/or the sensor (10) can be screwed into the blind hole (20).

12. System (1) for automatically performing hygienic flushing processes in a drinking water system (4),
wherein the system (1) comprises an outlet fitting (2) and a preferably mobile flushing device (3), wherein the flushing device (3) is configured according to any one of the preceding claims, and
wherein the flushing device (3) can be or is fluidically connected to an outlet (2A) of the outlet fitting (2),
in that the system (1) comprises a server (21) which is physically separated from the flushing device (3) and is configured to automatically transmit to the server (21) measured values of the sensors (10) and/or a message, in particular a warning, generated on the basis of the measured values,
wherein the server (21) is configured to transmit the measured values and/or message to a mobile terminal, in particular in an email, SMS, message of an instant messaging service, and/or push message, and/or wherein the server (21) is configured to control, program and/or configure the flushing device (3).

13. Method, wherein temperature profiles of separate hygienic flushing processes performed by a flushing device (3) are determined using the flushing device (3) for automatically performing hygienic flushing processes in a drinking water system (4), which device comprises a temperature sensor (10C),
wherein the flushing device (3) comprises a timer (15) and a controller (12) which is connected to the temperature sensor (10C) and by means of which the performance of hygienic flushing processes by the flushing device (3) is controlled,
wherein the controller (12) measures and records the temperature as a function of time by means of the temperature sensor (10C) and the timer (15),
**characterized in that**
a temperature profile is compared with a plurality of other temperature profiles by means of the flushing device (3), deviations between the temperature profiles are determined by comparing the temperature profiles, and the performance of future hygienic flushing processes is changed if a deviation between temperature profiles fulfils at least one test criterion.

14. Use of a flushing device (3) configured according to any one of claims 1 to 11, which device is mobile and which is configured for automatically performing hygienic flushing processes in a drinking water system (4) and for connection to an outlet (2A) of an outlet fitting (2) and comprises a pressure sensor (10A) for determining the pressure in an associated drinking water system (4) for leak monitoring of the drinking water system (4).

15. Use of a flushing device (3) configured according to any one of claims 1 to 11, which device is mobile and is configured for automatically performing hygienic flushing processes in a drinking water system (4) and for connection to an outlet (2A) of an outlet fitting (2), for determining a leak and/or damage in the drinking water system (4), for monitoring the function of at least one heating device, in particular of the drinking water system (4), for measuring an ambient temperature and/or for determining a risk of a pipe breakage.

## Revendications

1. Dispositif de rinçage (3) pour la mise en oeuvre automatique de rinçages hygiéniques dans un système d'eau potable (4),
dans lequel le dispositif de rinçage (3) présente un capteur de température (10C) pour la mesure de la température de l'eau, qui traverse le dispositif de rinçage (3) lors d'un rinçage hygiénique,
dans lequel le dispositif de rinçage (3) est configuré pour déterminer avec le capteur de température (10C) des profils de température de rinçages hygiéniques séparés mis en oeuvre avec le dispositif de rinçage (3),
dans lequel le dispositif de rinçage (3) présente un chronomètre (15) et une commande (12) reliée au capteur de température (10C), par laquelle est commandée la mise en oeuvre de rinçages hygiéniques avec le dispositif de rinçage (3), et
dans lequel la commande (12) est réalisée pour mesurer et enregistrer la température en tant que fonction du temps au moyen du capteur de température (10C) et du chronomètre (15),
**caractérisé en ce que**
le dispositif de rinçage (3) est réalisé pour comparer un profil de température à plusieurs autres profils de température, pour déterminer par comparaison des profils de température des écarts entre les profils de température et pour modifier la réalisation de rinçages hygiéniques ultérieurs lorsqu'un écart entre des profils de température satisfait au moins à un critère de contrôle.

2. Dispositif de rinçage selon la revendication 1, **caractérisé en ce que** le dispositif de rinçage (3) présente en outre un capteur de température ambiante (10E) pour mesurer la température ambiante et est en outre réalisé pour identifier une anomalie, en particulier une panne d'un moyen de chauffage ou un risque de rupture de tuyau sur la base d'une comparaison de valeurs de mesure du capteur de température (10C) à des valeurs de mesure du capteur de température ambiante (10E).

3. Dispositif de rinçage selon la revendication 1 ou 2, **caractérisé en ce que** le dispositif de rinçage (3) est réalisé pour générer, émettre et/ou transmettre une notification, en particulier une alerte.

4. Dispositif de rinçage selon la revendication 3, **caractérisé en ce que** l'écart consiste **en ce qu'**après un temps plus court dans le cas d'un ou de plusieurs profils de température précédentes, une valeur de seuil spécifiée ou pouvant être spécifiée d'une vitesse de modification de température est atteinte ou n'est pas dépassée, en particulier une température constante est atteinte.

5. Dispositif de rinçage selon la revendication 3 ou 4, **caractérisé en ce que** la notification, en particulier l'alerte, présente un signal acoustique et/ou optique, et/ou peut être transmise à un appareil externe, en particulier un serveur (21), un appareil terminal mobile et/ou un dispositif d'utilisation (16).

6. Dispositif de rinçage selon l'une quelconque des revendications précédentes, **caractérisé en ce que** le dispositif de rinçage (3) est réalisé pour identifier, à l'aide d'écarts entre des profils de température, une fuite et/ou un endommagement, en particulier une rupture de tuyau, dans le système d'eau potable (4) et/ou une panne d'un moyen de chauffage, en particulier du système d'eau potable (4) ; et/ou que le dispositif de rinçage (3) présente un capteur de pression (10A), dans lequel le dispositif de rinçage (3) est réalisé pour identifier, sur la base d'une variation de température et d'une pression ou d'un profil de pression mesuré avec le capteur de pression (10A), une anomalie de pression, une fuite et/ou un endommagement, en particulier une rupture de tuyau, dans le système d'eau potable (4), de préférence dans lequel le dispositif de rinçage (3) est en outre réalisé pour générer, envoyer et/ou transmettre dans le cas d'une identification de ce type, une notification, en particulier une alerte ; et/ou que le dispositif de rinçage (3) est réalisé pour déterminer une différence de température des valeurs de mesure du capteur de température (10C) et du capteur de température ambiante (10E) au cours d'un rinçage hygiénique et pour évaluer la différence de température, en particulier une valeur maximale de différence de température, avec un critère de contrôle, de préférence dans lequel le dispositif de rinçage (3) est en outre réalisé pour générer, envoyer et/ou transmettre en fonction de la différence de température une notification, en particulier une alerte.

7. Dispositif de rinçage selon l'une quelconque des revendications précédentes, **caractérisé en ce que** le dispositif de rinçage (3) présente une soupape (9) bistable pouvant être commandée de manière électrique et est réalisé pour que lors de l'ouverture de la soupape (9), de l'eau sorte du dispositif de rinçage (3) et que lors de la fermeture de la soupape (9), la sortie d'eau hors du dispositif de rinçage (3) soit empêchée,
dans lequel le dispositif de rinçage (3) présente un moyen d'alimentation en énergie (13) pour une alimentation en énergie de réglage et un moyen d'alimentation en énergie de secours (18) séparé du moyen d'alimentation en énergie (13), au moyen duquel la soupape (9) peut être fermée dans le cas d'une panne du moyen d'alimentation en énergie (13) ou de l'alimentation en énergie de réglage.

8. Dispositif de rinçage selon la revendication 7, **caractérisé en ce que** le moyen d'alimentation en énergie de secours (18) présente un accumulateur d'énergie électrique (18A), qui peut être chargé par le moyen d'alimentation en énergie (13) et peut être relié à la soupape (9) de manière séparée du moyen d'alimentation en énergie (13) pour fermer la soupape (9).

9. Dispositif de rinçage selon la revendication 7 ou 8, **caractérisé en ce que** la commande (12) est réalisée pour entraîner automatiquement la fermeture de la soupape (9) au moyen du moyen d'alimentation en énergie de secours (18) lorsque, quand la soupape (9) est ouverte, le moyen d'alimentation en énergie (13) ou l'alimentation en énergie de réglage tombe en panne ; et/ou que le dispositif de rinçage (3) est réalisé pour générer, envoyer et/ou transmettre une notification, en particulier une alerte lorsque le moyen d'alimentation en énergie (13) ou l'alimentation en énergie de réglage tombe en panne.

10. Dispositif de rinçage selon l'une quelconque des revendications précédentes, **caractérisé en ce que** le dispositif de rinçage (3) présente un boîtier (19) formant un canal de fluide (K) avec une entrée (6) et une sortie (7), une soupape (9) avec une tête de soupape (9A), et un ou plusieurs capteurs (10), à savoir le capteur de température (10C) et en particulier un capteur de pression (10A), un capteur de débit volumique (10B) et/ou un capteur de niveau de remplissage (100),
dans lequel la tête de soupape (9A) et/ou au moins un des capteurs (10) peuvent être reliés ou sont reliés depuis un côté extérieur du boîtier (19) au boîtier (19) de telle manière que la tête de soupape (9A) et/ou l'au moins un capteur (10) sont en liaison active avec le canal de fluide (K) entre l'entrée (6) et la sortie (7).

11. Dispositif de rinçage selon la revendication 10, **caractérisé en ce que** le canal de fluide (K) est formé par un ou plusieurs trous, en particulier des alésages, dans le boîtier (19) ; et/ou que le boîtier (19) présente au moins un trou borgne (20), qui s'étend depuis un côté extérieur du boîtier (19) vers le canal de fluide (K), dans lequel la tête de soupape (9A) et/ou l'au moins un capteur (10) peuvent être disposés ou sont disposés de telle manière dans le trou borgne (20) que le trou borgne (20) est fermé de manière étanche aux fluides, de préférence dans lequel le trou borgne (20) présente un filetage pour être relié à la soupape (9) et/ou au capteur (10) et la soupape (9) et/ou le capteur (10) peuvent être vissés dans le trou borgne (20).

12. Système (1) pour la mise en oeuvre automatique de rinçages hygiéniques dans un système d'eau potable (4),
dans lequel le système (1) présente une robinetterie (2) et un dispositif de rinçage (3) de manière préférée mobile, dans lequel le dispositif de rinçage (3) est réalisé selon l'une quelconque des revendications précédentes, et
dans lequel le dispositif de rinçage (3) est raccordé ou peut être raccordé de manière fluidique à une sortie (2A) de la robinetterie (2),
et que le système (1) présente un serveur (21) séparé physiquement du dispositif de rinçage (3) et est réalisé pour transmettre automatiquement au serveur (21) des valeurs de mesure des capteurs (10) et/ou une notification, en particulier une alerte, générée sur la base des valeurs de mesure,
dans lequel le serveur (21) est configuré pour transmettre les valeurs de mesure et/ou la notification à un appareil terminal mobile, en particulier dans un e-mail, un SMS, un message d'un service de messagerie instantanée et/ou une notification PUSH, et/ou dans lequel le serveur (21) est configuré pour commander, programmer et/ou configurer le dispositif de rinçage (3).

13. Procédé, dans lequel des profils de température de rinçages hygiéniques séparés mis en oeuvre avec le dispositif de rinçage (3) sont déterminées avec un dispositif de rinçage (3) pour la mise en oeuvre automatique de rinçages hygiéniques dans un système d'eau potable (4), qui présente un capteur de température (10C),
dans lequel
le dispositif de rinçage (3) présente un chronomètre (15) et une commande (12) reliée au capteur de température (10C), par laquelle est commandée la mise en oeuvre de rinçages hygiéniques avec le dispositif de rinçage (3),
dans lequel la commande (12) mesure et enregistre la température en tant que fonction du temps au moyen du capteur de température (10C) et du chronomètre (15), **caractérisé en ce que**
un profil de température est comparé à plusieurs autres profils de température avec le dispositif de rinçage (3), des écarts entre les profils de température sont déterminés en comparant les profils de température, et la mise en oeuvre de rinçages hygiéniques ultérieurs est modifiée lorsqu'un écart entre des profils de température satisfait au moins à un critère de contrôle.

14. Utilisation d'un dispositif de rinçage (3) réalisé selon l'une quelconque des revendications 1 à 11, qui est mobile, pour la mise en oeuvre automatique de rinçages hygiéniques dans un système d'eau potable (4) et pour le raccordement à une sortie (2A) d'une robinetterie (2) et présente un capteur de pression (10A) pour la détermination de la pression dans un système d'eau potable (4) associé, pour la surveillance de fuites du système d'eau potable (4).

15. Utilisation d'un dispositif de rinçage (3) réalisé selon l'une quelconque des revendications 1 à 11, qui est mobile et est réalisé pour la mise en oeuvre automatique de rinçages hygiéniques dans un système d'eau potable (4) et pour le raccordement à une sortie (2A) d'une robinetterie (2), pour la détermination d'une fuite et/ou d'un endommagement dans le système d'eau potable (4), pour la surveillance du fonctionnement d'au moins un système de chauffage, en particulier du système d'eau potable (4), pour la mesure d'une température ambiante et/ou pour la détermination d'un risque de rupture de tuyau.
